# EUROPEAN PATENT SPECIFICATION

(11) **EP 4 138 498 B1**
(45) Date of publication and mention of the grant of the patent: **03.06.2026**
(21) Application number: 21789054.0
(22) Date of filing: 12.04.2021
(51) Int. Cl.: H04W 72/232, H04L 5/00

(54) **SCHEDULING METHOD, AND TERMINAL AND NETWORK SIDE DEVICE**
PLANUNGSVERFAHREN SOWIE ENDGERÄT UND NETZWERKSEITIGE VORRICHTUNG
PROCÉDÉ DE PLANIFICATION, ET TERMINAL ET DISPOSITIF CÔTÉ RÉSEAU

(30) Priority: 15.04.2020 CN 202010294798
(43) Date of publication of application: 22.02.2023
(73) Proprietor: Datang Mobile Communications Equipment Co., Ltd., Beijing 100085 (CN)
(72) Inventor: WANG, Lei, Beijing 100083 (CN); GAO, Xuejuan, Beijing 100083 (CN)
(74) Representative: dompatent
(86) International application number: PCT/CN2021/086598
(87) International publication number: WO 2021/208848

(56) References cited:
- WO-A1-2019/215888
- WO-A1-2020/033647
- WO-A1-2020/033647
- CN-A- 105 578 608
- CN-A- 111 901 885
- US-A1- 2011 086 659
- US-A1- 2019 312 635
- NTT DOCOMO, INC.: "HARQ enhancement for NR-U", 3GPP DRAFT; R1-1912876, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20191118 - 20191122, 8 November 2019 (2019-11-08), Mobile Competence Centre ; 650, route des Lucioles ; F-06921 Sophia-Antipolis Cedex ; France , XP051820224
- VIVO: "Remaining issues on physical UL channel design in unlicensed spectrum", 3GPP DRAFT; R1-2000308, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-meeting; 20200224 - 20200306, 14 February 2020 (2020-02-14), Mobile Competence Centre ; 650, route des Lucioles ; F-06921 Sophia-Antipolis Cedex ; France , XP051852797

## Description

### TECHNICAL FIELD

The present disclosure relates to the field of communications technology, in particular to a scheduling method, a terminal and a network-side device.

### BACKGROUND

In a system in the related art, scheduling information is mainly sent to a terminal through downlink control information (DCI), so as to schedule the transmission of a channel or a signal of the terminal. However, in a communication system in the related art, each DCI can only be used to schedule the transmission of one channel or one signal, resulting in a low scheduling efficiency of the DCI.

US 2019/312635 A1 discloses techniques supporting timing parameter management during BWP switching. BWP switching may include indication of one or more timing parameters used for time domain resource allocation. The timing parameters may be indicated based on an index to a look-up table (e.g., a bit field in a control transmission). One or more tables may be configured for a given BWP, and different tables may contain a different number of rows. The size of the bit field indexing the table may in turn depend on the number of rows. When switching from a first BWP to a second BWP, the size of the bit field may be based on the table of the first BWP, but the bit field may index the table of the second BWP. US2011/086659 discloses a method for scheduling multiple CCs using a DCI format in which the DCI bit length corresponds to a CC index number. WO2020/033647 discloses a method for scheduling transmissions in which multiple PDSCHs may be scheduled on different CCs and/or BWPs using a single DCI.

### SUMMARY

Embodiments of the present disclosure provide a scheduling method, a terminal and a network-side device, so as to address the issue that each DCI can only be used to schedule the transmission of one channel or one signal, resulting in a low scheduling efficiency of the DCI.

The invention is set out in the appended set of claims.

In the embodiments of the present disclosure, the terminal receives the DCI sent by a network-side device, where the DCI is used for scheduling transmission of N channels or N signals of the terminal, the N channels include N uplink channels or N downlink channels, the N signals include N uplink signals or N downlink signals, where N is an integer greater than 1. Since the transmission of multiple channels or multiple signals may be scheduled, the scheduling efficiency of DCI is improved.

### BRIEF DESCRIPTION OF THE DRAWINGS

Fig. 1 is a schematic view showing a network structure to which embodiments of the present disclosure may be applied;
Fig. 2 is a flow chart of a scheduling method according to an embodiment of the present disclosure;
Fig. 3 is a schematic view showing a resource according to an embodiment of the present disclosure;
Fig. 4 is another flow chart of a scheduling method according to an embodiment of the present disclosure;
Fig. 5 is a schematic structural view showing a terminal according to an embodiment of the present disclosure;
Fig. 6 is another schematic structural view showing a terminal according to an embodiment of the present disclosure;
Fig. 7 is a schematic structural view showing a network-side device according to an embodiment of the present disclosure;
Fig. 8 is another schematic structural view showing a network-side device according to an embodiment of the present disclosure;
Fig. 9 is yet another schematic structural view showing a terminal according to a non-claimed embodiment of the present disclosure;
Fig. 10 is yet another schematic structural view showing a network-side device according to a non-claimed embodiment of the present disclosure.

### DETAILED DESCRIPTION

In order to make the technical problems to be solved, the technical solutions and the advantages of the embodiments of the present disclosure clearer, a detailed description will be given below with reference with the drawings and specific embodiments.

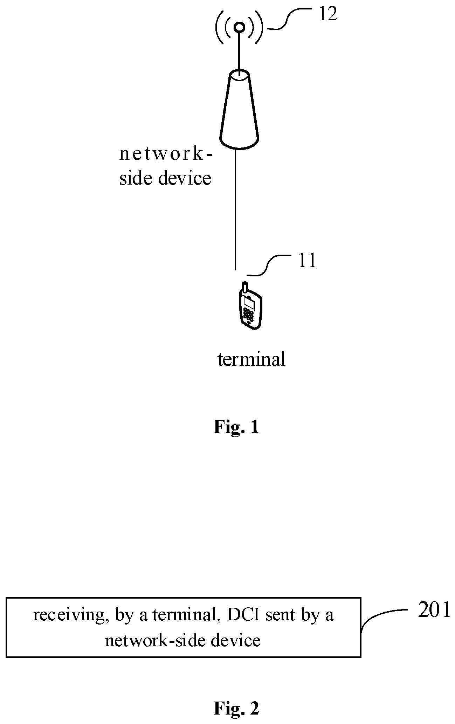

Fig. 1 is a schematic view showing a network structure to which embodiments of the present disclosure may be applied. As shown in Fig. 1, the network structure includes a terminal 11 and a network-side device 12. The terminal 11 may be user equipment (UE) or other terminal devices, for example, a terminal side device such as a mobile phone, a tablet personal computer, a laptop computer, a personal digital assistant (PDA), a mobile Internet device (MID), a wearable device, a robot, or a vehicle. It should be noted that a specific type of the terminal is not limited in the embodiments of present disclosure. The network side device 12 may be an access network device, for example, a base station such as a macro station, a long term evolution (LTE) base station (evolved Node base station, eNB), a fifth generation (5G) new radio (NR) base station (gNB), etc. The network side device may also be a small station, such as a low power node (LPN), a pico, a femto, or the network-side device may be an access point (AP). The network-side device may also be a central unit (CU). The above-mentioned network-side device may also be a core network device, such as a mobility management entity (MME), an access management function (AMF), a session management function (SMF), a user plane function (UPF), a serving gateway (SGW), a public data network gateway (PDN gateway), a policy control function (PCF), a policy and charging rules function (PCRF), a serving general packet radio service (GPRS) support node (SGSN). It should be noted that a specific type of the network side device is not limited in the embodiments of present disclosure.

Fig. 2 is a flow chart of a scheduling method according to an embodiment of the present disclosure. As shown in Fig. 2, the scheduling method includes the following step 201.

Step 201, receiving, by a terminal, DCI sent by a network-side device, where the DCI is used for scheduling transmission of N channels or N signals of the terminal. The N channels include N uplink channels or N downlink channels, the N signals include N uplink signals or N downlink signals, where N is an integer greater than 1.

The N channels may be N channels on a same carrier, so it is possible to schedule the transmission of multiple channels on one carrier through one DCI. Alternatively, the N channels may be channels on different carriers, so it is possible to schedule the transmission of channels on multiple carriers through one DCI. For example, the N channels are N channels on N carriers respectively, in this way, the transmission of one channel on each carrier is scheduled through the above-mentioned DCI. Of course, it is also possible to schedule the transmission of one channel on one carrier, and to schedule the transmission of multiple channels on one or more carriers.

The N signals may be N signals on a same carrier, so it is possible to schedule the transmission of multiple signals on one carrier through one DCI. Alternatively, the N signals are signals on different carriers, so it is possible to schedule the transmission of signals on multiple carriers through one DCI.

In addition, the transmission of the N channels or N signals may be sending or reception of the N channels or N signals.

In the embodiment of the present disclosure, through the above steps, it is possible to schedule the transmission of multiple channels or multiple signals through one DCI, thereby improving the scheduling efficiency of the DCI as well as improving the scheduling flexibility.

A bit length of at least one information field in the DCI corresponds to a configuration parameter.

The at least one information field may be the entire information of the DCI, i.e., bit lengths of all information fields of the DCI correspond to the configuration parameter. Alternatively, the at least one information field may be some information fields of the information fields in the DCI, i.e., bit lengths of some information fields in the DCI correspond to the configuration parameter.

In addition, the configuration parameter may be a configuration parameter configured by a network side, such as a high-layer configuration parameter. Of course, the configuration parameter may also be a configuration parameter predetermined in a protocol. The configuration parameter may be a configuration parameter related to scheduling of channel or signal transmission, such as a time-domain resource allocation (TDRA) table, carrier bandwidth information, and a subcarrier spacing.

That the bit length of at least one information field in the DCI corresponds to the configuration parameter may be understood as that the bit length of the at least one information field in the DCI is determined by the configuration parameter. In addition, that the bit length of an information field corresponds to the configuration parameter may mean that the bit length of the information field may effectively indicate the scheduling of multiple channels or multiple signals in accordance with the configuration parameter.

In the implementation, the bit length of the at least one information field in the DCI corresponds to the configuration parameter, so it is possible to determine the length of the information field effectively, thereby reducing DCI overhead and avoiding introduction of an excessive DCI payload size.

The at least one information field includes a first information field, and a bit length of the first information field is a maximum length of the first information field that corresponds to one or more sets of configuration parameters.

The maximum length of the first information field that corresponds to one or more sets of configuration parameters may be a maximum length of the first information field determined by the one or more sets of configuration parameters, and the maximum length may indicate the scheduling of the channels or signals in accordance with each set of configuration parameters among the one or more sets of configuration parameters

In the implementation, the bit length of the first information field is the maximum length, in this way, the scheduling in accordance with each configuration parameter may be effectively indicated.

The first information field includes an information field for TDRA, and the one or more sets of configuration parameters include one or more TDRA tables.

The TDRA table may be configured at the network side and transmitted to the terminal, for example, a TDRA table configured through RRC signaling; or the TDRA table may be determined in a protocol.

In this way, a bit length of the information field for TDRA may be determined through the TDRA table.

The one or more TDRA tables are N TDRA tables, and different TDRA tables correspond to different respective channels or signals. The N TDRA tables have a same quantity of rows, and a bit length of the information field for TDRA corresponds to the quantity of rows of the N TDRA tables. Or, the N TDRA tables have different quantities of rows, and the bit length of the information field for TDRA corresponds to a maximum quantity of rows among the N TDRA tables. Or, the bit length of the information field for TDRA corresponds to a total quantity of rows of the N TDRA tables.

That different TDRA tables correspond to different respective channels or signals may mean that different TDRA tables correspond to different respective carriers, i.e., N different carriers scheduled by one DCI are configured with N TDRA tables independent from each other, specifically, the DCI schedules N channels or N signals on different carriers. Optionally, that different TDRA tables correspond to different respective channels or signals may mean that different TDRA tables correspond to different channels or channels on the same carrier

That the N TDRA tables have different quantities of rows may mean that different TDRA tables have different quantities of rows, or, some of the TDRA tables have a same quantity of rows and the rest of the TDRA tables have different quantities of rows.

The quantity of rows of the TDRA table may be a quantity of rows including TDRA information, and exclude the first row of directory information of the TDRA table. Of course, the quantity of rows of the TDRA table may also be the quantity of all rows, i.e., including the first row of directory information of the TDRA table. In this way, when determining a correspondence between the bit length and the quantity of rows of the TDRA table, the first row needs to be removed.

That the bit length of the information field for TDRA corresponds to the quantity of rows of the TDRA table may mean that the information field may indicate all entry indexes in the TDRA table.

For example, in a case where N TDRA tables have the same quantity of rows, a TDRA indication field in the DCI is determined by the quantity of rows of the TDRA tables, and every status bit indicates the entry index in the TDRA table. For example, assuming that the TDRA tables each have 16 rows, then 0000 indicates a first row of the TDRA table (it should be noted that the first row does not refer to a first row of the entire table, but refers to a first row of the TDRA table that includes time domain resource allocation information, such as a row where a table index is 0), so that the terminal sends and receives data on a component carrier (CC) #1 in accordance with a first row of a table corresponding to the CC#1, sends and receives data on a CC#2 in accordance with a first row of a table corresponding to the CC#2, and so on.

Optionally, in case that the bit length of the information field for TDRA corresponds to the maximum quantity of rows among the N TDRA tables, all bits of the information field for TDRA are used to indicate an entry index in a first TDRA table, and M1 least significant bits (LSBs) of the information field for TDRA are used to indicate an entry index in a second TDRA table, where the first TDRA table is a table having a maximum quantity of rows among the N TDRA tables, the second TDRA table is a table having a quantity of rows different from the first TDRA table among the N TDRA tables, where M1 is an integer greater than or equal to 1.

M1 may correspond to the quantity of rows of the second TDRA table.

In this way, it is possible to save the overhead of the information field effectively.

For example, in a case where the N TDRA tables have different quantities of rows, the TDRA indication field in the DCI is determined by the maximum quantity of rows in the configuration tables, and each state indicates an entry index in the TDRA tables. For example, if N=2, a TDRA table configured for CC#1 has 32 rows, and a TDRA table configured for CC#2 has 16 rows, then the TDRA indication field in the scheduling DCI has 5 bits. For a corresponding carrier, the terminal determines the time domain resource allocation information on the carrier according to M1 LSB bits determined by a TDRA table of the carrier. For example, for state information 11111, the terminal sends and receives data on CC#1 in accordance with the 32^{nd} row in the corresponding TDRA table, and sends and receives data on CC#2 in accordance with the 16^{th} row in the corresponding TDRA table

Optionally, in case that the bit length of the information field for TDRA corresponds to the total quantity of rows of the N TDRA tables, the information field for TDRA includes N bit parts, where the N bit parts are used for indicating entry indexes in the N TDRA tables respectively.

The above N bit parts may be ordered according to the N TDRA tables, so as to sequentially indicate the entry indexes in the N TDRA tables.

For example, the length of the information field is determined by the total quantity of bits of the N TDRA tables, every Xi bits in the information field is used for indicating TDRA on the i^{th} CC among N CCs, and Xi bits of different CCs do not overlap with each other, Xi is a value determined in accordance with a size of a TDRA table of the i^{th} CC. For example, if N=2, the TDRA table configured for the CC#1 has 32 rows, and the TDRA table configured for the CC#2 has 16 rows, then the length of the TDRA information field is log2(32)+log2(16)=9 bits, where 5 most significant bits (MSBs) are used for indicating the time domain resource allocation on the CC#1, and 4 LSBs are used for indicating the time domain resource allocation on the CC#2.

Optionally, the one or more TDRA tables are a common TDRA table including TDRA information of the N channels or N signals, and a bit length of the information field for TDRA corresponds to a quantity of rows of the common TDRA table.

That the common TDRA table includes the TDRA information of the N channels or N signals may mean that the common TDRA table includes the TDRA information of the N carriers, since the N channels or N signals may be channels or signals on the N carriers.

Different CCs may be configured with the same common TDRA table, e.g., all the N carriers are configured with the common TDRA table. The common TDRA table is as shown in Table 1.

**Table 1**

| TDRA table index | TDRA for CC#1 | TDRA for CC#2 |
|---|---|---|
| 0 | combination 1 of a Mapping type, K0/K2, S, L and R | combination 1 of a Mapping type, K0/K2, S, L and R |
| 1 | combination 2 of a Mapping type, K0/K2, S, Land R | combination 2 of a Mapping type, K0/K2, S, L and R |
| 2 | combination 3 of a Mapping type, K0/K2, S, L and R | combination 3 of a Mapping type, K0/K2, S, L and R |
| 3 | combination 4 of a Mapping type, K0/K2, S, L and R | combination 4 of a Mapping type, K0/K2, S, L and R |
| 4 | combination 5 of a Mapping type, K0/K2, S, Land R | combination 5 of a Mapping type, K0/K2, S, L and R |
| 5 | combination 6 of a Mapping type, K0/K2, S, L and R | combination 6 of a mapping type, K0/K2, S, L and R |
| 6 | combination 7 of a Mapping type, K0/K2, S, L and R | Null |
| 7 | combination 1 of a Mapping type, K0/K2, S, L and R | Null |
| ... | | |

In this way, it is possible to indicate the scheduling on the carrier through one table, and save the overhead of DCI. It should be appreciated that, Table 1 is merely for an illustrative purpose. The aforementioned common TDRA table may also correspond to the time domain resource allocation of three or more carriers.

In an optional implementation, it is not expected by the terminal that transmission start positions of the N channels or the N signals are before a reception time of the DCI.

In the implementation, it may be achieved that the terminal side does not expect that a starting position of data transmission is prior to the reception time of the corresponding scheduling DCI, and even if it is prior to the DCI reception time, the terminal may determine that the channel or signal is erroneous and do not perform transmission.

In an optional implementation, the first information field includes an information field for frequency domain resource allocation (FDRA), and the one or more sets of configuration parameters include one or more pieces of BWP information.

The BWP information may include such information as bandwidth information, resource block (RB) information, and a subcarrier spacing. The BWP information may be configured at the network side and transmitted to the terminal, for example, BWP information configured through radio resource control (RRC) signaling, or the BWP information may be predetermined in a protocol.

In this implementation, a bit length of the information field for FDRA may be determined through the BWP information.

The one or more pieces of BWP information are N pieces of BWP information of N active BWPs, a bit length of the information field for FDRA corresponds to a BWP having a largest bandwidth among the N active BWPs, or, the bit length of the information field for FDRA corresponds to a total bandwidth of the N active BWPs. Or, the one or more pieces of BWP information include BWP information of an active BWP on a scheduling carrier, and BWP information of all configured BWPs on scheduled carriers, the bit length of the information field for FDRA corresponds to a BWP having a largest bandwidth among the active BWP on the scheduling carrier and all configured BWPs on the scheduled carriers, the scheduling carrier is a carrier on which the DCI is sent, and the scheduled carriers are carriers on which the channels or signals scheduled by the DCI are located.

The N active BWPs may be N active BWPs of the terminal, e.g., N active BWPs on different carriers, or N active BWPs on the same carrier.

That the bit length of the information field for FDRA corresponds to the BWP having the largest bandwidth among the N active BWPs may mean that the information field may indicate the frequency domain resource allocation of the BWP having the largest bandwidth. That the bit length of the information field for FDRA corresponds to the total bandwidth of the N active BWPs may mean that the length of the information field is determined based on the total bandwidth of the N active BWPs, such as the quantity of RBs of the total bandwidth.

Optionally, in case that the bit length of the information field for FDRA corresponds to the BWP having the largest bandwidth among the N active BWPs, all bits of the information field for FDRA are used for indicating FDRA of a first active BWP, and M2 LSBs of the information field for FDRA are used for indicating FDRA of a second active BWP, where the first active BWP is a BWP having the largest bandwidth among the N active BWPs, the second active BWP is a BWP having a bandwidth different from the first active BWP among the N active BWPs, where M2 is an integer greater than or equal to 1.

The M2 may be determined based on the bandwidth of the second active BWP.

For example, the terminal regards the maximum FDRA field length determined from N active BWPs on N carriers scheduled by the DCI as the length of the FDRA field, and each state information bit indicates the frequency domain resource allocation information of the N BWPs. For example, if N=2, an active BWP configured on the CC#1 includes Q=100 RBs, and an active BWP configured on the CC#2 includes P=50 RBs, then the FDRA indication field in the scheduling DCI is determined based on the active BWP on the CC#1. The terminal determines the time domain resource allocation information of a corresponding carrier in accordance with M LSB bits determined by FDRA, where M is determined by a size of the active BWP on the corresponding carrier.

Optionally, in case that the bit length of the information field for FDRA corresponds to the total bandwidth of the N active BWPs, the information field for FDRA indicates FDRAs of the N active BWPs jointly.

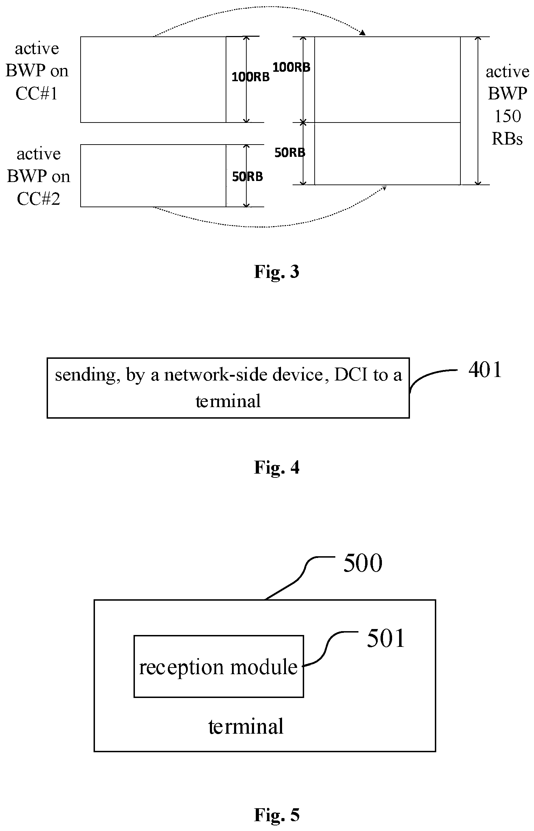

The "jointly indicating" may refer to that the FDRA indicated by the information field for FDRA simultaneously include FDRAs of the N active BWPs. For example, the N active BWPs are treated as a large virtual BWP, and the information field is used for frequency domain resource allocation in the virtual BWP. For example, as shown in Fig. 3, the active BWP on the CC#1 includes upper 100 RBs of the virtual BWP, and the active BWP on the CC#2 includes lower 50 RBs of the virtual BWP, so when RBs indicated by the information field include these two parts of RBs, scheduled RBs in the active BWP on the CC#1 and the active BWP on the CC#2 can be determined. For example, that the resource allocation indicated by the FDRA field is RB#50 to RB#130 means that resources occupied by data transmission in the active BWP on the CC#1 are RB#50 to RB#100, and resources occupied by data transmission in the active BWP on the CC#2 are RB#1 to RB#30.

The overhead of DCI may be saved though jointly indicating the FDRAs of the N active BWPs.

In an optional implementation, the scheduling method further includes: performing, by the terminal, transmission of the N channels or N signals in accordance with the DCI.

The transmission of the N channels or N signals in accordance with the DCI may be sending or reception of the N channels or N signals in accordance with the DCI.

In the embodiments of the present disclosure, the terminal receives the DCI sent by a network-side device, where the DCI is used for scheduling transmission of N channels or N signals of the terminal, the N channels include N uplink channels or N downlink channels, the N signals include N uplink signals or N downlink signals, where N is an integer greater than 1. Since the transmission of multiple channels or multiple signals can be scheduled, the scheduling efficiency of the DCI can be improved and the scheduling flexibility can be improved.

Fig. 4 is another flow chart of a scheduling method according to an embodiment of the present disclosure. As shown in Fig. 4, the scheduling method includes the following step 401.

Step 401, sending, by a network-side device, downlink control information (DCI) to a terminal, where the DCI is used for scheduling transmission of N channels or N signals of the terminal. The N channels include N uplink channels or N downlink channels, the N signals include N uplink signals or N downlink signals, where N is an integer greater than 1.

Optionally, the N channels are N channels on a same carrier, or, the N channels are channels on different carriers. Or, the N signals are N signals on a same carrier, or the N signals are signals on different carriers.

A bit length of at least one information field in the DCI corresponds to a configuration parameter.

The at least one information field includes a first information field, and a bit length of the first information field is a maximum length of the first information field that corresponds to one or more sets of configuration parameters.

The first information field includes an information field for time-domain resource allocation (TDRA), and the one or more sets of configuration parameters include one or more TDRA tables.

The one or more TDRA tables are N TDRA tables, and different TDRA tables correspond to different respective channels or signals. The N TDRA tables have a same quantity of rows, and a bit length of the information field for TDRA corresponds to the quantity of rows of the N TDRA tables. Or, the N TDRA tables have different quantities of rows, and the bit length of the information field for TDRA corresponds to a maximum quantity of rows among the N TDRA tables. Or, the bit length of the information field for TDRA corresponds to a total quantity of rows of the N TDRA tables.

Optionally, in case that the bit length of the information field for TDRA corresponds to the maximum quantity of rows among the N TDRA tables, all bits of the information field for TDRA are used to indicate an entry index in a first TDRA table, and M1 least significant bits (LSBs) of the information field for TDRA are used to indicate an entry index in a second TDRA table, where the first TDRA table is a table having the maximum quantity of rows among the N TDRA tables, the second TDRA table is a table having a quantity of rows different from the first TDRA table among the N TDRA tables, where M1 is an integer greater than or equal to 1. Or, in case that the bit length of the information field for TDRA corresponds to the total quantity of rows of the N TDRA tables, the information field for TDRA includes N bit parts used for indicating entry indexes in the N TDRA tables respectively.

Optionally, the one or more TDRA tables are a common TDRA table including TDRA information of the N channels or N signals, and a bit length of the information field for TDRA corresponds to a quantity of rows of the common TDRA table.

Optionally, the first information field includes an information field for frequency domain resource allocation (FDRA), and the one or more sets of configuration parameters include one or more pieces of bandwidth part (BWP) information.

Optionally, the one or more pieces of BWP information are N pieces of BWP information of N active BWPs, a bit length of the information field for FDRA corresponds to a BWP having a largest bandwidth among the N active BWPs, or, the bit length of the information field for FDRA corresponds to a total bandwidth of the N active BWPs. Or, the one or more pieces of BWP information include BWP information of an active BWP on a scheduling carrier, and BWP information of all configured BWPs on scheduled carriers, the bit length of the information field for FDRA corresponds to a BWP having a largest bandwidth among the active BWP on the scheduling carrier and all configured BWPs on the scheduled carriers, the scheduling carrier is a carrier on which the DCI is sent, and the scheduled carriers are carriers on which the channels or signals scheduled by the DCI are located.

Optionally, in case that the bit length of the information field for FDRA corresponds to the BWP having the largest bandwidth among the N active BWPs, all bits of the information field for FDRA are used for indicating FDRA of a first active BWP, and M2 LSBs of the information field for FDRA are used for indicating FDRA of a second active BWP, where the first active BWP is a BWP having the largest bandwidth among the N active BWPs, the second active BWP is a BWP having a bandwidth different from the first active BWP among the N active BWPs, where M2 is an integer greater than or equal to 1. Or, in case that the bit length of the information field for FDRA corresponds to the total bandwidth of the N active BWPs, the information field for FDRA indicates FDRAs of the N active BWPs jointly.

Optionally, the scheduling method further includes: performing, by the network-side device, transmission of the N channels or N signals in accordance with the DCI.

It should be appreciated that, as the embodiment of the network-side device corresponds to the above-mentioned embodiment shown in Fig. 2, for the specific implementation thereof, references may be made to the relevant description of the embodiment shown in Fig. 2, and the same technical effects may be achieved. To avoid repetition, the same part and beneficial effects of this method embodiment are not described in detail again.

The scheduling method provided by the embodiment of the present disclosure is illustrated below by taking a case where the network-side device is a base station as an example.

### Embodiment 1

In the embodiment, it is presumed that the network-side schedules data transmission on N carriers through one DCI transmitted on a scheduling carrier.

In the embodiment, it is presumed that N=2, the base station configures for the terminal different TDRA tables on two CCs, namely CC#1 and CC#2, and the TDRA tables of the CC#1 and the CC#2 have the same quantity of rows, such as 16 rows, then the TDRA indication field carried in the DCI includes log2(16)=4 bits of information. Data channel time domain resource allocation configurations carried by the two TDRA tables may be different. After receiving the scheduling DCI, the terminal determines the time domain resource allocation of the data channels on the CC#1 and the CC#2 in the following manner.

The terminal determines, in accordance with the received TDRA indication field, an index of table entry used by data channel transmission. For data transmission on the CC#1, the index indicates a TDRA table corresponding to the CC#1. For data transmission on the CC#2, the index indicates a TDRA table corresponding to CC#2. For example, 0000 indicates that the allocation of the time domain resource occupied by the data channel on the CC#1 is determined by information corresponding to a first row of the TDRA table corresponding to the CC#1, and indicates that the allocation of the time domain resource occupied by the data channel on the CC#2 is determined by information corresponding to a first row of the TDRA table corresponding to the CC#2; 0001 indicates that the allocation of the time domain resource occupied by the data channel on the CC#1 is determined by information corresponding to a second row of the TDRA table corresponding to the CC#1, and indicates that the allocation of the time domain resource occupied by the data channel on the CC#2 is determined by information corresponding to a second row of the TDRA table corresponding to the CC#2; 0010 indicates that the allocation of the time domain resource occupied by the data channel on the CC#1 is determined by information corresponding to a third row of the TDRA table corresponding to the CC#1, and indicates that the allocation of the time domain resource occupied by the data channel on the CC#2 is determined by information corresponding to a third row of the TDRA table corresponding to the CC#2; and so on.

Further, when different CCs have different subcarrier spacings (SCSs), the terminal does not expect that the time domain resource allocation information indicated by the TDRA tables indicated by the DCI would cause a starting position of the data channel transmission to be earlier than a transmission time of the DCI.

### Embodiment 2

In the embodiment, it is presumed that the network-side schedules data transmission on N carriers through one DCI transmitted on a scheduling carrier.

In the embodiment, it is presumed that N=2, the base station configures for the terminal different TDRA tables on two CCs, namely CC#1 and CC#2, and the TDRA tables corresponding to the CC#1 and the CC#2 respectively have different quantities of rows. For example, the TDRA table corresponding to the CC#1 has 32 rows, and the TDRA table corresponding to the CC#2 has 16 rows. The quantity of bits of the TDRA indication field carried in the DCI is determined by a maximum quantity of rows in the configuration tables, i.e., log2(32)=5 bits. A data channel time domain resource allocation configuration carried by each row in the two TDRA tables may be different. After receiving the scheduling DCI, the terminal determines the time domain resource allocation of the data channels on the CC#1 and the CC#2 in the following manner.

The terminal determines, in accordance with the received TDRA indication field, an index of table entry used by data channel transmission. Specifically, log2 (entry number) LSBs in the TDRA indication field are used for indicating the entry index in each table. For data transmission on the CC#1, the index indicates that a TDRA table corresponding to the CC#1 is notified by using 5 bits. For data transmission on the CC#2, the index indicates that a TDRA table corresponding to CC#2 is notified by using 4 LSBs. For example, 11111 indicates that the allocation of the time domain resource occupied by the data channel on the CC#1 is determined by information corresponding to a 32nd row of the TDRA Table corresponding to the CC#1, and indicates that the allocation of the time domain resource occupied by the data channel on the CC#2 is determined by information corresponding to a 16th row of the TDRA Table corresponding to the CC#2. For another example, that the TDRA indication field in DCI is 00001 means that the allocation of the time domain resource occupied by the data channel on the CC#1 is determined by information corresponding to a second row of the TDRA table corresponding to the CC#1, and the allocation of the time domain resource occupied by the data channel on the CC#2 is determined by information corresponding to a second row of the TDRA table corresponding to the CC#2. The above description is also applicable to other information states, and thus will not be particularly defined herein.

When different CCs have different SCSs, the terminal does not expect that the time domain resource allocation information indicated by the TDRA tables indicated by the DCI would cause a starting position of the data channel transmission to be earlier than a transmission time of the DCI.

### Embodiment 3

In the embodiment, it is presumed that the network-side schedules data transmission on N carriers through one DCI transmitted on a scheduling carrier.

In the embodiment, it is presumed that N=2, the quantity of bits of the TDRA field in the DCI is determined by the total quantity of bits of the N TDRA tables. It is presumed that the base station configures for the terminal different TDRA tables on two CCs, namely CC#1 and CC#2, and the TDRA tables corresponding to the CC#1 and the CC#2 have different quantities of rows. For example, the TDRA table corresponding to the CC#1 has 32 rows, and the TDRA table corresponding to the CC#2 has 16 rows, so the quantity of bits of the TDRA indication field carried in the DCI is log2(32)+ log2(16)=9 bits. After receiving the scheduling DCI, the terminal determines the time domain resource allocation of the data channels on the CC#1 and the CC#2 in the following manner.

The terminal determines, in accordance with the received TDRA indication field, an index of table entry used by data channel transmission. Specifically, log2(32)=5 MSBs in the TDRA indication field are used for indicating an entry index in the TDRA table corresponding to the CC#1, and log2(16)=4 LSBs in the TDRA indication field are used for indicating an entry index in the TDRA table corresponding to the CC#2.

When different CCs have different SCSs, the terminal does not expect that the time domain resource allocation information indicated by the TDRA tables indicated by the DCI would cause a starting position of the data channel transmission to be earlier than a transmission time of the DCI.

### Embodiment 4

In the embodiment, it is presumed that the network-side schedules data transmission on N carriers through one DCI transmitted on a scheduling carrier.

In the embodiment, it is presumed that N=2, the base station configures for the terminal a same TDRA table on two CCs, the quantity of bits of the TDRA field in the DCI is determined by the quantity of rows of the TDRA table.

Each row in the common TDRA table includes time-domain resource allocation information of data transmission on multiple CCs, such as a mapping type of the data channel, a gap between the data channel and PDCCH, and a starting symbol position of the data channel in a slot, the quantity of occupied consecutive symbols, repetition information. A simple example may be as shown in Table 1, which will not be particularly defined herein.

It is presumed that the common TDRA table has 16 rows, the TDRA indication field in the DCI includes 4 bits of information, and indicates one row of the table. For example, state information 0000 indicates that the data transmission on CC#1 and CC#2 is determined in accordance with the first row of the TDRA table. The time domain resource occupied by data scheduled on the CC#1 is determined by information related to the CC#1 in the first row of the TDRA table, and the time domain resource occupied by data scheduled on the CC#2 is determined by information related to CC#2 in the first row of the TDRA table, and so on.

When different CCs have different SCSs, the terminal does not expect that the time domain resource allocation information indicated by the TDRA table indicated by the DCI would cause a starting position of the data channel transmission to be earlier than a transmission time of the DCI.

### Embodiment 5

In the embodiment, for frequency domain resource allocation, the terminal receives BWP information configured by the network side through RRC signaling, and receives one DCI including multiple pieces of frequency domain resource allocation information transmitted on the scheduling carrier, and performs sending and reception of a data channel on the corresponding carrier. The specific process is as follows.

The terminal determines a length of a FDRA field in accordance with a BWP having a largest bandwidth among N active BWPs, and each state information bit indicates frequency domain resource allocation information on the N BWPs. For example, if N=2, an active BWP configured on CC#1 has Q=100 RBs, an active BWP configured on CC#2 has P=50 RBs, then the FDRA indication field in the scheduling DCI is determined in accordance with the active BWP on the CC#1. The terminal determines the time domain resource allocation information on the carrier based on M LSBs determined according to FDRA on the corresponding carrier.

Alternatively, the terminal determines the length of the FDRA field in accordance with the total quantity of RBs included in active BWPs on N CCs, and jointly indicates the allocation of data transmission resources on the multiple CCs.

Alternatively, the terminal determines the length of the FDRA field in accordance with a BWP having a largest bandwidth among an active BWP on a scheduling carrier and all configured BWPs on scheduled carriers, so as to avoid the occurrence of different DCI payload sizes during switching among the scheduled carriers.

### Embodiment 6

In the embodiment, it is presumed that the network-side schedules data transmission on N carriers through one DCI transmitted on a scheduling carrier.

In the embodiment, it is presumed that N=2, the base station configures for the terminal active BWPs having different bandwidths on two CCs. The quantity of bits in a FDRA indication field carried in the DCI is determined by a BWP having a largest bandwidth among the active BWPs on the two CCs. To be specific, if an active BWP configured on CC#1 has Q=100 RBs, and an active BWP configured on CC#2 has P=50 RBs, then the FDRA indication field in the scheduling DCI is determined in accordance with the active BWP on the CC#1. After receiving the scheduling DCI, the terminal determines frequency domain resource allocation of data channels on the CC#1 and the CC#2 in the following manner.

The terminal determines time domain resource allocation information of the carrier in accordance with M LSBs determined by FDRA. For data transmission on the CC#1, M is determined by a bandwidth occupied by the active BWP on the CC#1; for data transmission on the CC#2, M is determined by a bandwidth occupied by the active BWP on the CC#2.

### Embodiment 7

In the embodiment, it is presumed that the network-side schedules data transmission on N carriers through one DCI transmitted on a scheduling carrier.

In the embodiment, it is presumed that N=2, and active BWPs configured by the base station for the terminal have a same bandwidth or different bandwidths on two CCs. The quantity of bits in a FDRA indication field carried in the DCI is determined by a total quantity of RBs in the active BWPs on the two CCs. To be specific, if an active BWP configured on CC#1 has Q=100 RBs, and an active BWP configured on CC#2 has P=50 RBs, then the FDRA indication field in the scheduling DCI is determined in accordance with 150+50=200 RBs. After receiving the scheduling DCI, the terminal determines frequency domain resource allocation of data channels on the CC#1 and the CC#2 in the following manner.

Two active BWPs on the CC#1 and the CC#2 are cascaded into a large virtual BWP at the terminal and the base station side, and frequency domain resource allocation is performed in the virtual BWP, i.e., frequency domain resource allocation information indicated by the FDRA field in the DCI is directed to the allocation within the virtual BWP. First 100 RBs in the virtual BWP represent a bandwidth that can be occupied by the data channel on the CC#1, and last 50 RBs in the virtual BWP represent a bandwidth that can be occupied by the data channel on the CC#2, as shown specifically in Fig. 3.

Specifically, an FDRA manner adopted by the DCI may be type0, type1 or type0&type1, which is not particularly limited in the embodiments of the present disclosure. If Type0 resource allocation (RA) is adopted, a bitmap of the information field is determined by a bandwidth of the virtual BWP (150 RBs) and a resource block group (RBG) size, which can realize inconsecutive resource allocation. If Type1 RA is adopted, the bit length of the FDRA field is determined by the bandwidth of the virtual BWP (150 RBs). For example, that the resource allocation indicated by the FDRA field is RB#50 to RB#130 means that resources occupied by data transmission in the active BWP on the CC#1 are RB#50 to RB#100, and resources occupied by data transmission in the active BWP on the CC#2 are RB#1 to RB#30.

As described in embodiments 6 and 7, the terminal may determine the length of the FDRA field in accordance with the BWP having the largest bandwidth among the active BWP on the scheduling carrier and all the configured BWPs on the scheduled carrier, so as to avoid the occurrence of different DCI payload sizes during switching among the scheduled carriers. For example, CC#1 is the scheduling carrier, and the bandwidth of the active BWP on the CC#1 has 50 RBs. CC#2 is the scheduled carrier, two BWPs, i.e., BWP#1 and BWP#2, are configured on the CC#2, and bandwidths of the BWP#1 and the BWP#2 are 100 RBs and 50 RBs respectively, where the BWP#2 is the active BWP on the CC#2. At this time, FDRA may be determined by a largest bandwidth (i.e., 100 RBs) among the bandwidth (i.e., 50 RBs) of the active BWP on the CC#1 and bandwidths of BWPs configured on the CC#2.

It should be appreciated that, the above-mentioned embodiments are described by only taking channel or signal scheduling on different CCs as an example, and may also be applied to multiple data channel scheduling on the same CC, which will not be particularly described in detail again.

In the embodiment of the present disclosure, the network-side device and the terminal may determine the bit lengths of multiple information fields in the scheduling DCI in accordance with multiple sets of high-layer signaling configurations for different data transmissions, and perform the data transmissions in accordance with the information fields in the single scheduling DCI. Since multiple data transmissions are scheduled through a single DCI, DCI overhead can be effectively reduced and introduction of excessive DCI payload size can be avoided.

Fig. 5 is a schematic structural view showing a terminal according to an embodiment of the present disclosure. As shown in Fig. 5, the terminal 500 includes: a reception module 501 configured to receive downlink control information (DCI) sent by a network-side device, where the DCI is used for scheduling transmission of N channels or N signals of the terminal. The N channels include N uplink channels or N downlink channels, the N signals include N uplink signals or N downlink signals, where N is an integer greater than 1.

Optionally, the N channels are N channels on a same carrier, or, the N channels are channels on different carriers. The N signals are N signals on a same carrier, or the N signals are signals on different carriers.

Optionally, a bit length of at least one information field in the DCI corresponds to a configuration parameter.

Optionally, the at least one information field includes a first information field, and a bit length of the first information field is a maximum length of the first information field that corresponds to one or more sets of configuration parameters.

Optionally, the first information field includes an information field for time-domain resource allocation (TDRA), and the one or more sets of configuration parameters include one or more TDRA tables.

Optionally, the one or more TDRA tables are N TDRA tables, and different TDRA tables correspond to different respective channels or signals. The N TDRA tables have a same quantity of rows, and a bit length of the information field for TDRA corresponds to the quantity of rows of the N TDRA tables. Or, the N TDRA tables have different quantities of rows, and the bit length of the information field for TDRA corresponds to a maximum quantity of rows among the N TDRA tables. Or, the bit length of the information field for TDRA corresponds to a total quantity of rows of the N TDRA tables.

Optionally, in case that the bit length of the information field for TDRA corresponds to the maximum quantity of rows among the N TDRA tables, all bits of the information field for TDRA are used to indicate an entry index in a first TDRA table, M1 least significant bits (LSBs) of the information field for TDRA are used to indicate an entry index in a second TDRA table, where the first TDRA table is a table having the maximum quantity of rows among the N TDRA tables, the second TDRA table is a table having a quantity of rows different from the first TDRA table among the N TDRA tables, where M1 is an integer greater than or equal to 1. In case that the bit length of the information field for TDRA corresponds to the total quantity of rows of the N TDRA tables, the information field for TDRA includes N bit parts used for indicating entry indexes in the N TDRA tables respectively.

Optionally, the one or more TDRA tables are a common TDRA table including TDRA information of the N channels or N signals, and a bit length of the information field for TDRA corresponds to a quantity of rows of the common TDRA table.

Optionally, it is not expected by the terminal that transmission start positions of the N channels or the N signals are before a reception time of the DCI.

Optionally, the first information field includes an information field for frequency domain resource allocation (FDRA), and the one or more sets of configuration parameters include one or more pieces of bandwidth part (BWP) information.

Optionally, the one or more pieces of BWP information are N pieces of BWP information of N active BWPs, a bit length of the information field for FDRA corresponds to a BWP having a largest bandwidth among the N active BWPs, or, the bit length of the information field for FDRA corresponds to a total bandwidth of the N active BWPs. Or, the one or more pieces of BWP information include BWP information of an active BWP on a scheduling carrier, and BWP information of all configured BWPs on scheduled carriers, the bit length of the information field for FDRA corresponds to a BWP having a largest bandwidth among the active BWP on the scheduling carrier and all configured BWPs on the scheduled carriers, the scheduling carrier is a carrier on which the DCI is sent, and the scheduled carriers are carriers on which the channels or signals scheduled by the DCI are located.

Optionally, in case that the bit length of the information field for FDRA corresponds to the BWP having the largest bandwidth among the N active BWPs, all bits of the information field for FDRA are used for indicating FDRA of a first active BWP, and M2 LSBs of the information field for FDRA are used for indicating FDRA of a second active BWP, where the first active BWP is a BWP having the largest bandwidth among the N active BWPs, and the second active BWP is a BWP having a bandwidth different from the first active BWP among the N active BWPs, where M2 is an integer greater than or equal to 1. In case that the bit length of the information field for FDRA corresponds to the total bandwidth of the N active BWPs, the information field for FDRA indicates FDRAs of the N active BWPs jointly.

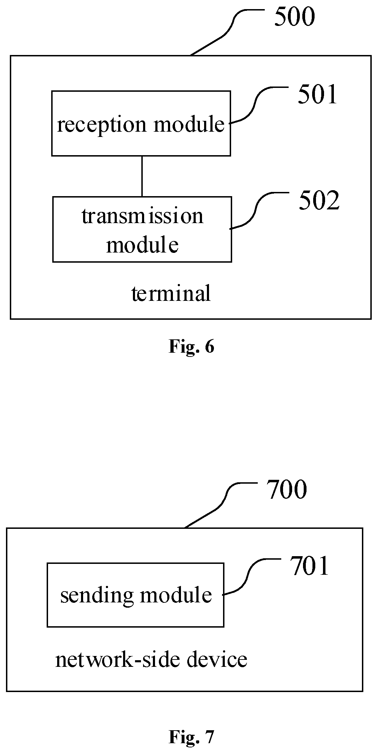

Optionally, as shown in Fig. 6, the terminal 500 further includes: a transmission module 502, configured to perform transmission of the N channels or N signals in accordance with the DCI.

It should be appreciated that, the terminal 500 may be any terminal in the above-mentioned method embodiments of the present disclosure. The implementations of the terminal in the above-mentioned method embodiments of the present disclosure may be performed by the terminal 500 with the same technical effects, which will not be particularly described herein.

Fig. 7 is a schematic structural view showing a network-side device according to an embodiment of the present disclosure. As shown in Fig. 7, the network-side device 700 includes: a sending module 701 configured to send downlink control information (DCI) to a terminal, where the DCI is used for scheduling transmission of N channels or N signals of the terminal. The N channels include N uplink channels or N downlink channels, the N signals include N uplink signals or N downlink signals, where N is an integer greater than 1.

Optionally, the N channels are N channels on a same carrier, or, the N channels are channels on different carriers. The N signals are N signals on a same carrier, or the N signals are signals on different carriers.

Optionally, a bit length of at least one information field in the DCI corresponds to a configuration parameter.

Optionally, the at least one information field includes a first information field, and a bit length of the first information field is a maximum length of the first information field that corresponds to one or more sets of configuration parameters.

Optionally, the first information field includes an information field for time-domain resource allocation (TDRA), and the one or more sets of configuration parameters include one or more TDRA tables.

Optionally, the one or more TDRA tables are N TDRA tables, and different TDRA tables correspond to different respective channels or signals. The N TDRA tables have a same quantity of rows, and a bit length of the information field for TDRA corresponds to the quantity of rows of the N TDRA tables. Or, the N TDRA tables have different quantities of rows, and the bit length of the information field for TDRA corresponds to a maximum quantity of rows among the N TDRA tables. Or, the bit length of the information field for TDRA corresponds to a total quantity of rows of the N TDRA tables.

Optionally, in case that the bit length of the information field for TDRA corresponds to the maximum quantity of rows among the N TDRA tables, all bits of the information field for TDRA are used to indicate an entry index in a first TDRA table, and M1 least significant bits (LSBs) of the information field for TDRA are used to indicate an entry index in a second TDRA table, where the first TDRA table is a table having the maximum quantity of rows among the N TDRA tables, and the second TDRA table is a table having a quantity of rows different from the first TDRA table among the N TDRA tables, where M1 is an integer greater than or equal to 1. In case that the bit length of the information field for TDRA corresponds to the total quantity of rows of the N TDRA tables, the information field for TDRA includes N bit parts used for indicating entry indexes in the N TDRA tables respectively.

Optionally, the one or more TDRA tables are a common TDRA table including TDRA information of the N channels or N signals, and a bit length of the information field for TDRA corresponds to a quantity of rows of the common TDRA table.

Optionally, the first information field includes an information field for frequency domain resource allocation (FDRA), and the one or more sets of configuration parameters include one or more pieces of bandwidth part (BWP) information.

Optionally, the one or more pieces of BWP information are N pieces of BWP information of N active BWPs, a bit length of the information field for FDRA corresponds to a BWP having a largest bandwidth among the N active BWPs, or, the bit length of the information field for FDRA corresponds to a total bandwidth of the N active BWPs. Or, the one or more pieces of BWP information include BWP information of an active BWP on a scheduling carrier, and BWP information of all configured BWPs on scheduled carriers, the bit length of the information field for FDRA corresponds to a BWP having a largest bandwidth among the active BWP on the scheduling carrier and all configured BWPs on the scheduled carriers, the scheduling carrier is a carrier on which the DCI is sent, and the scheduled carriers are carriers on which the channels or signals scheduled by the DCI are located.

Optionally, in case that the bit length of the information field for FDRA corresponds to the BWP having the largest bandwidth among the N active BWPs, all bits of the information field for FDRA are used for indicating FDRA of a first active BWP, and M2 LSBs of the information field for FDRA are used for indicating FDRA of a second active BWP, where the first active BWP is a BWP having the largest bandwidth among the N active BWPs, the second active BWP is a BWP having a bandwidth different from the first active BWP among the N active BWPs, where M2 is an integer greater than or equal to 1. In case that the bit length of the information field for FDRA corresponds to the total bandwidth of the N active BWPs, the information field for FDRA indicates FDRAs of the N active BWPs jointly.

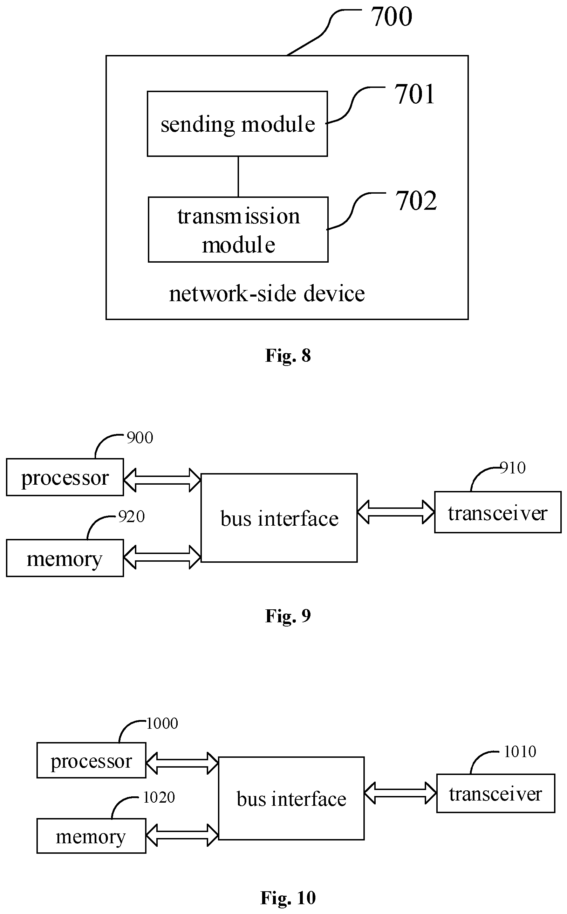

Optionally, as shown in Fig. 8, the network-side device 700 further includes: a transmission module 702, configured to perform transmission of the N channels or N signals in accordance with the DCI.

It should be appreciated that, the network-side device 700 may be any network-side device in the above-mentioned method embodiments of the present disclosure. The implementations of the network-side device in the above-mentioned method embodiments of the present disclosure may be performed by the network-side device 700 with the same technical effects, which will not be particularly described herein.

Fig. 9 is yet another schematic structural view showing a terminal according to a non-claimed embodiment of the present disclosure. As shown in Fig. 9, the terminal includes a transceiver 910, a processor 900, and a memory 920 storing therein a program executable by the processor 900, the transceiver 910 is configured to receive downlink control information (DCI) sent by a network-side device, where the DCI is used for scheduling transmission of N channels or N signals of the terminal. The N channels include N uplink channels or N downlink channels, the N signals include N uplink signals or N downlink signals, where N is an integer greater than 1.

The transceiver 910 may be configured to receive and send data under the control of the processor 900.

As shown in Fig. 9, a bus architecture may include any quantity of buses and bridges connected to each other, so as to connect various circuits such as one or more processors represented by the processor 900 and a memory represented by the memory 920. The bus architecture may be used to connect any other circuits, such as peripherals, voltage regulators and power management circuits, which is well known in the art. Therefore, a detailed description thereof is omitted herein. A bus interface provides an interface. The transceiver 910 may include a plurality of elements, i.e., a transmitter and a receiver, to allow for communication with other devices over a transmission medium.

The processor 900 is responsible for managing the bus architecture as well as general processing. The memory 920 may store data used by the processor 900 during operation.

It should be appreciated that the memory 920 is not limited to be in the terminal, and the memory 920 and the processor 900 may be located separately in different geographic locations.

Optionally, the N channels are N channels on a same carrier, or, the N channels are channels on different carriers. The N signals are N signals on a same carrier, or the N signals are signals on different carriers.

Optionally, a bit length of at least one information field in the DCI corresponds to a configuration parameter.

Optionally, the at least one information field includes a first information field, and a bit length of the first information field is a maximum length of the first information field that corresponds to one or more sets of configuration parameters.

Optionally, the first information field includes an information field for time-domain resource allocation (TDRA), and the one or more sets of configuration parameters include one or more TDRA tables.

Optionally, the one or more TDRA tables are N TDRA tables, and different TDRA tables correspond to different respective channels or signals. The N TDRA tables have a same quantity of rows, and a bit length of the information field for TDRA corresponds to the quantity of rows of the N TDRA tables. Or, the N TDRA tables have different quantities of rows, and the bit length of the information field for TDRA corresponds to a maximum quantity of rows among the N TDRA tables. Or, the bit length of the information field for TDRA corresponds to a total quantity of rows of the N TDRA tables.

Optionally, in case that the bit length of the information field for TDRA corresponds to the maximum quantity of rows among the N TDRA tables, all bits of the information field for TDRA are used to indicate an entry index in a first TDRA table, and M1 least significant bits (LSBs) of the information field for TDRA are used to indicate an entry index in a second TDRA table, where the first TDRA table is a table having the maximum quantity of rows among the N TDRA tables, and the second TDRA table is a table having a quantity of rows different from the first TDRA table among the N TDRA tables, where M1 is an integer greater than or equal to 1. In case that the bit length of the information field for TDRA corresponds to the total quantity of rows of the N TDRA tables, the information field for TDRA includes N bit parts used for indicating entry indexes in the N TDRA tables respectively.

Optionally, the one or more TDRA tables are a common TDRA table including TDRA information of the N channels or N signals, and a bit length of the information field for TDRA corresponds to a quantity of rows of the common TDRA table.

Optionally, it is not expected by the terminal that transmission start positions of the N channels or the N signals are before a reception time of the DCI.

Optionally, the first information field includes an information field for frequency domain resource allocation (FDRA), and the one or more sets of configuration parameters include one or more pieces of bandwidth part (BWP) information.

Optionally, the one or more pieces of BWP information are N pieces of BWP information of N active BWPs, a bit length of the information field for FDRA corresponds to a BWP having a largest bandwidth among the N active BWPs, or, the bit length of the information field for FDRA corresponds to a total bandwidth of the N active BWPs. Or, the one or more pieces of BWP information include BWP information of an active BWP on a scheduling carrier, and BWP information of all configured BWPs on scheduled carriers, the bit length of the information field for FDRA corresponds to a BWP having a largest bandwidth among the active BWP on the scheduling carrier and all configured BWPs on the scheduled carriers, the scheduling carrier is a carrier on which the DCI is sent, and the scheduled carriers are carriers on which the channels or signals scheduled by the DCI are located.

Optionally, in case that the bit length of the information field for FDRA corresponds to the BWP having the largest bandwidth among the N active BWPs, all bits of the information field for FDRA are used for indicating FDRA of a first active BWP, and M2 LSBs of the information field for FDRA are used for indicating FDRA of a second active BWP, where the first active BWP is a BWP having the largest bandwidth among the N active BWPs, and the second active BWP is a BWP having a bandwidth different from the first active BWP among the N active BWPs, where M2 is an integer greater than or equal to 1. In case that the bit length of the information field for FDRA corresponds to the total bandwidth of the N active BWPs, the information field for FDRA indicates FDRAs of the N active BWPs jointly.

Optionally, the transceiver 910 is further configured to perform transmission of the N channels or N signals in accordance with the DCI.

It should be appreciated that, the terminal may be any terminal in the above-mentioned method embodiments of the present disclosure. The implementations of the terminal in the above-mentioned method embodiments of the present disclosure may be performed by the terminal with the same technical effects, which will not be particularly described herein.

Fig. 10 is yet another schematic structural view showing a network-side device according to a non-claimed embodiment of the present disclosure. As shown in Fig. 10, the network-side device includes a transceiver 1010, a processor 1000, and a memory 1020 storing therein a program executable by the processor 1000, the transceiver 1010 is configured to send downlink control information (DCI) to a terminal, where the DCI is used for scheduling transmission of N channels or N signals of the terminal. The N channels include N uplink channels or N downlink channels, the N signals include N uplink signals or N downlink signals, where N is an integer greater than 1.

The transceiver 1010 may be configured to receive and send data under the control of the processor 1000.

As shown in Fig. 10, a bus architecture may include any quantity of buses and bridges connected to each other, so as to connect various circuits such as one or more processors represented by the processor 1000 and a memory represented by the memory 1020. The bus architecture may be used to connect any other circuits, such as peripherals, voltage regulators and power management circuits, which is well known in the art. Therefore, a detailed description thereof is omitted herein. A bus interface provides an interface. The transceiver 1010 may include a plurality of elements, i.e., a transmitter and a receiver, to allow for communication with other devices over a transmission medium.

The processor 1000 is responsible for managing the bus architecture as well as general processing. The memory 1020 may store data used by the processor 1000 during operation.

It should be appreciated that the memory 1020 is not limited to be in the network-side device, and the memory 1020 and the processor 1000 may be located separately in different geographic locations.

Optionally, the N channels are N channels on a same carrier, or, the N channels are channels on different carriers. The N signals are N signals on a same carrier, or the N signals are signals on different carriers.

Optionally, a bit length of at least one information field in the DCI corresponds to a configuration parameter.

Optionally, the at least one information field includes a first information field, and a bit length of the first information field is a maximum length of the first information field that corresponds to one or more sets of configuration parameters.

Optionally, the first information field includes an information field for time-domain resource allocation (TDRA), and the one or more sets of configuration parameters include one or more TDRA tables.

Optionally, the one or more TDRA tables are N TDRA tables, and different TDRA tables correspond to different respective channels or signals. The N TDRA tables have a same quantity of rows, and a bit length of the information field for TDRA corresponds to the quantity of rows of the N TDRA tables. Or, the N TDRA tables have different quantities of rows, and the bit length of the information field for TDRA corresponds to a maximum quantity of rows among the N TDRA tables. Or, the bit length of the information field for TDRA corresponds to a total quantity of rows of the N TDRA tables.

Optionally, in case that the bit length of the information field for TDRA corresponds to the maximum quantity of rows among the N TDRA tables, all bits of the information field for TDRA are used to indicate an entry index in a first TDRA table, and M1 least significant bits (LSBs) of the information field for TDRA are used to indicate an entry index in a second TDRA table, where the first TDRA table is a table having the maximum quantity of rows among the N TDRA tables, and the second TDRA table is a table having a quantity of rows different from the first TDRA table among the N TDRA tables, where M1 is an integer greater than or equal to 1. In case that the bit length of the information field for TDRA corresponds to the total quantity of rows of the N TDRA tables, the information field for TDRA includes N bit parts used for indicating entry indexes in the N TDRA tables respectively.

Optionally, the one or more TDRA tables are a common TDRA table including TDRA information of the N channels or N signals, and a bit length of the information field for TDRA corresponds to a quantity of rows of the common TDRA table.

Optionally, the first information field includes an information field for frequency domain resource allocation (FDRA), and the one or more sets of configuration parameters include one or more pieces of bandwidth part (BWP) information.

Optionally, the one or more pieces of BWP information are N pieces of BWP information of N active BWPs, a bit length of the information field for FDRA corresponds to a BWP having a largest bandwidth among the N active BWPs, or, the bit length of the information field for FDRA corresponds to a total bandwidth of the N active BWPs. Or, the one or more pieces of BWP information include BWP information of an active BWP on a scheduling carrier, and BWP information of all configured BWPs on scheduled carriers, the bit length of the information field for FDRA corresponds to a BWP having a largest bandwidth among the active BWP on the scheduling carrier and all configured BWPs on the scheduled carriers, the scheduling carrier is a carrier on which the DCI is sent, and the scheduled carriers are carriers on which the channels or signals scheduled by the DCI are located.

Optionally, in case that the bit length of the information field for FDRA corresponds to the BWP having the largest bandwidth among the N active BWPs, all bits of the information field for FDRA are used for indicating FDRA of a first active BWP, and M2 LSBs of the information field for FDRA are used for indicating FDRA of a second active BWP, where the first active BWP is a BWP having the largest bandwidth among the N active BWPs, and the second active BWP is a BWP having a bandwidth different from the first active BWP among the N active BWPs, where M2 is an integer greater than or equal to 1. In case that the bit length of the information field for FDRA corresponds to the total bandwidth of the N active BWPs, the information field for FDRA indicates FDRAs of the N active BWPs jointly.

Optionally, the transceiver 1010 is further configured to perform transmission of the N channels or N signals in accordance with the DCI.

It should be appreciated that, the network-side device may be any network-side device in the above-mentioned method embodiments of the present disclosure. The implementations of the network-side device in the above-mentioned method embodiments of the present disclosure may be performed by the network-side device with the same technical effects, which will not be particularly described herein.

A computer-readable storage medium storing thereon a computer program is further provided in a non-claimed embodiment of the present disclosure, the computer program is configured to be executed by a processor, to implement the steps of the above-mentioned scheduling method at a terminal side and the steps of the above-mentioned scheduling method at a network-side device side.

Those of ordinary skill in the art can realize that the exemplary units and algorithm steps described with reference to the embodiments disclosed in this specification can be implemented by electronic hardware or a combination of computer software and electronic hardware. Whether these functions are implemented by hardware or software depends on specific applications and design constraints of the technical solutions. A person skilled in the art may use different methods to implement the described functions for each specific application, but such implementation should not be considered as exceeding the scope of this disclosure.

Those skilled in the art can clearly understand that, to describe conveniently and concisely, for a specific working process of the system, apparatus, and unit described above, references can be made to the corresponding process in the foregoing method embodiments. Details are not described herein again.

In the embodiments provided in this disclosure, it should be understood that the disclosed apparatuses and methods may be implemented in other ways. For example, the apparatus embodiments described above are merely illustrative. For example, the division of the units is only logical function division. There may be other division manners in actual implementation, for example, multiple units or components may be combined or integrated into another system, or some features may be ignored or not implemented. In addition, the mutual coupling, direct coupling, or communication connection shown or discussed may be indirect coupling or communication connection through some interfaces, apparatuses, or units, and may be in electrical, mechanical, or other forms.

The units described as separate components may be or may not be physically separated, and the components displayed as units may be or may not be physical units, that is, may be located in one place or distributed on multiple network units. Some or all of the units may be selected according to actual needs to achieve the objective of the solutions of the embodiments.

In addition, the functional units in the embodiments of the present disclosure may be integrated into one processing unit, or the functional units may exist independently, or two or more functional units may be combined together. These units may be implemented in the form of hardware, or in the form of hardware plus software functional unit.

The functional units implemented in a software form may be stored in a computer-readable storage medium. These software functional units may be stored in a storage medium and include several instructions so as to enable a computer device (a personal computer, a server or network device) to execute all or some of the steps of the methods according to the embodiments of the present disclosure. The storage medium includes any medium capable of storing therein program codes, e.g., a universal serial bus (USB) flash disk, a mobile hard disk, a read-only memory (ROM), a random access memory (RAM), a magnetic disk or an optical disc.

As can be appreciated by a person skilled in the art, all or part of the processes in the methods of the above-mentioned embodiments may be performed by controlling the relevant hardware through a computer program, and the program may be stored in the computer-readable storage medium, and the program is executed to implement the processes in the methods of the above-mentioned embodiments. The storage medium may be a magnetic disk, an optical disc, a read-only memory (ROM) or a random access memory (RAM), etc.

It should be appreciated that, the implementations in the embodiments of the present disclosure may be implemented by hardware, software, firmware, middleware, microcode, or a combination thereof. For hardware implementation, modules, units and sub-units may be implemented in one or more application specific integrated circuits (ASICs), digital signal processors (DSPs), digital signal processing devices (DSPDs), programmable logic devices (PLDs), field-programmable gate arrays (FPGAs), general-purpose processors, controllers, microcontrollers, microprocessors, other electronic units for implementing the above-mentioned functions or a combination thereof.

For software implementation, the techniques described in the embodiments of the present disclosure may be implemented through modules (e.g., procedures, functions, etc.) that perform the functions described in the embodiments of the present disclosure. Software codes may be stored in the memory and executed by the processor. The memory may be implemented in the processor or external to the processor.

## Claims

1. A scheduling method, **characterized by** comprising:
receiving (201), by a terminal, downlink control information, DCI, sent by a network-side device, wherein the DCI is used for scheduling transmission of N channels or N signals of the terminal;
performing, by the terminal, transmission of the N channels or N signals in accordance with the DCI;
wherein the N channels comprise N uplink channels or N downlink channels, the N signals comprise N uplink signals or N downlink signals, where N is an integer greater than 1;
wherein a bit length of at least one information field in the DCI corresponds to a configuration parameter;
wherein the at least one information field comprises a first information field;
wherein a bit length of the first information field is a maximum length of the first information field that corresponds to one or more sets of configuration parameters;
wherein the first information field comprises an information field for time-domain resource allocation, TDRA; the one or more sets of configuration parameters comprise one or more TDRA tables;
or,
wherein the first information field comprises an information field for frequency domain resource allocation, FDRA; the one or more sets of configuration parameters comprise one or more pieces of bandwidth part, BWP, information;
wherein the one or more TDRA tables are N TDRA tables, and different TDRA tables correspond to different respective channels or signals;
or,
wherein the one or more TDRA tables are a common TDRA table comprising TDRA information of the N channels or N signals, and a bit length of the information field for TDRA corresponds to a quantity of rows of the common TDRA table;
or,
wherein the one or more pieces of BWP information are N pieces of BWP information of N active BWPs;
or,
wherein the one or more pieces of BWP information comprise BWP information of an active BWP on a scheduling carrier, and BWP information of all configured BWPs on scheduled carriers.

2. The scheduling method according to claim 1, wherein the N channels are channels on a same carrier, or, the N channels are channels on different carriers; or,
the N signals are signals on a same carrier, or the N signals are signals on different carriers.

3. The scheduling method according to claim 1, wherein in case that the one or more TDRA tables are N TDRA tables, and different TDRA tables correspond to different respective channels or signals,
the N TDRA tables have a same quantity of rows, and a bit length of the information field for TDRA corresponds to the quantity of rows of the N TDRA tables; or,
the N TDRA tables have different quantities of rows, and the bit length of the information field for TDRA corresponds to a maximum quantity of rows among the N TDRA tables; or,
the bit length of the information field for TDRA corresponds to a total quantity of rows of the N TDRA tables;
or,
wherein in case that the one or more pieces of BWP information are N pieces of BWP information of N active BWPs, a bit length of the information field for FDRA corresponds to a BWP having a largest bandwidth among the N active BWPs, or, the bit length of the information field for FDRA corresponds to a total bandwidth of the N active BWPs; or,
wherein in case that the one or more pieces of BWP information comprise BWP information of an active BWP on a scheduling carrier, and BWP information of all configured BWPs on scheduled carriers, the bit length of the information field for FDRA corresponds to a BWP having a largest bandwidth among the active BWP on the scheduling carrier and all configured BWPs on the scheduled carriers, the scheduling carrier is a carrier on which the DCI is sent, and the scheduled carriers are carriers on which the channels or signals scheduled by the DCI are located.

4. The scheduling method according to claim 3, wherein in case that the bit length of the information field for TDRA corresponds to the maximum quantity of rows among the N TDRA tables, all bits of the information field for TDRA are used to indicate an entry index in a first TDRA table, and M1 least significant bits, LSBs, of the information field for TDRA are used to indicate an entry index in a second TDRA table, wherein the first TDRA table is a table having a maximum quantity of rows among the N TDRA tables, the second TDRA table is a table having a quantity of rows different from the first TDRA table among the N TDRA tables, where M1 is an integer greater than or equal to 1; or,
wherein in case that the bit length of the information field for TDRA corresponds to the total quantity of rows of the N TDRA tables, the information field for TDRA comprises N bit parts used for indicating entry indexes in the N TDRA tables respectively;
or,
wherein in case that the bit length of the information field for FDRA corresponds to the BWP having the largest bandwidth among the N active BWPs, all bits of the information field for FDRA are used for indicating FDRA of a first active BWP, and M2 LSBs of the information field for FDRA are used for indicating FDRA of a second active BWP, wherein the first active BWP is a BWP having the largest bandwidth among the N active BWPs, the second active BWP is a BWP having a bandwidth different from the first active BWP among the N active BWPs, where M2 is an integer greater than or equal to 1; or,
wherein in case that the bit length of the information field for FDRA corresponds to the total bandwidth of the N active BWPs, the FDRA indicated by the information field for FDRA simultaneously comprises FDRAs of the N active BWPs.

5. The scheduling method according to claim 1, wherein in case that transmission start positions of the N channels or the N signals are before a reception time of the DCI reception time, the terminal does not perform transmission of the N channels or the N signals.

6. A scheduling method, **characterized by** comprising:
sending (401), by a network-side device, downlink control information, DCI, to a terminal, wherein the DCI is used for scheduling transmission of N channels or N signals of the terminal;
performing, by the network-side device, transmission of the N channels or N signals in accordance with the DCI;
wherein the N channels comprise N uplink channels or N downlink channels, the N signals comprise N uplink signals or N downlink signals, where N is an integer greater than 1;
wherein a bit length of at least one information field in the DCI corresponds to a configuration parameter;
wherein the at least one information field comprises a first information field;
wherein a bit length of the first information field is a maximum length of the first information field that corresponds to one or more sets of configuration parameters;
wherein the first information field comprises an information field for time-domain resource allocation, TDRA; the one or more sets of configuration parameters comprise one or more TDRA tables;
or,
wherein the first information field comprises an information field for frequency domain resource allocation, FDRA; the one or more sets of configuration parameters comprise one or more pieces of bandwidth part, BWP, information;
wherein the one or more TDRA tables are N TDRA tables, and different TDRA tables correspond to different respective channels or signals;
or,
wherein the one or more TDRA tables are a common TDRA table comprising TDRA information of the N channels or N signals, and a bit length of the information field for TDRA corresponds to a quantity of rows of the common TDRA table;
or,
wherein the one or more pieces of BWP information are N pieces of BWP information of N active BWPs;
or,
wherein the one or more pieces of BWP information comprise BWP information of an active BWP on a scheduling carrier, and BWP information of all configured BWPs on scheduled carriers.

7. The scheduling method according to claim 6, wherein the N channels are channels on a same carrier, or, the N channels are channels on different carriers; or,
the N signals are signals on a same carrier, or the N signals are signals on different carriers.

8. The scheduling method according to claim 6, wherein in case that the one or more TDRA tables are N TDRA tables, and different TDRA tables correspond to different respective channels or signals,
the N TDRA tables have a same quantity of rows, and a bit length of the information field for TDRA corresponds to the quantity of rows of the N TDRA tables; or,
the N TDRA tables have different quantities of rows, and the bit length of the information field for TDRA corresponds to a maximum quantity of rows among the N TDRA tables; or,
the bit length of the information field for TDRA corresponds to a total quantity of rows of the N TDRA tables;
or,
wherein in case that the one or more pieces of BWP information are N pieces of BWP information of N active BWPs, a bit length of the information field for FDRA corresponds to a BWP having a largest bandwidth among the N active BWPs, or, the bit length of the information field for FDRA corresponds to a total bandwidth of the N active BWPs; or,
wherein in case that the one or more pieces of BWP information comprise BWP information of an active BWP on a scheduling carrier, and BWP information of all configured BWPs on scheduled carriers, the bit length of the information field for FDRA corresponds to a BWP having a largest bandwidth among the active BWP on the scheduling carrier and all configured BWPs on the scheduled carriers, the scheduling carrier is a carrier on which the DCI is sent, and the scheduled carriers are carriers on which the channels or signals scheduled by the DCI are located.

9. The scheduling method according to claim 8, wherein in case that the bit length of the information field for TDRA corresponds to the maximum quantity of rows among the N TDRA tables, all bits of the information field for TDRA are used to indicate an entry index in a first TDRA table, M1 least significant bits, LSBs, of the information field for TDRA are used to indicate an entry index in a second TDRA table, wherein the first TDRA table is a table having the maximum quantity of rows among the N TDRA tables, the second TDRA table is a table having a quantity of rows different from the first TDRA table among the N TDRA tables, where M1 is an integer greater than or equal to 1; or,
wherein in case that the bit length of the information field for TDRA corresponds to the total quantity of rows of the N TDRA tables, the information field for TDRA comprises N bit parts used for indicating entry indexes in the N TDRA tables respectively;
or,
wherein in case that the bit length of the information field for FDRA corresponds to the BWP having the largest bandwidth among the N active BWPs, all bits of the information field for FDRA are used for indicating FDRA of a first active BWP, and M2 LSBs of the information field for FDRA are used for indicating FDRA of a second active BWP, wherein the first active BWP is a BWP having the largest bandwidth among the N active BWPs, the second active BWP is a BWP having a bandwidth different from the first active BWP among the N active BWPs, where M2 is an integer greater than or equal to 1; or,
wherein in case that the bit length of the information field for FDRA corresponds to the total bandwidth of the N active BWPs, the FDRA indicated by the information field for FDRA simultaneously comprises FDRAs of the N active BWPs.

10. A terminal (500), **characterized by** comprising:
a reception module (501), configured to receive downlink control information, DCI, sent by a network-side device, wherein the DCI is used for scheduling transmission of N channels or N signals of the terminal;
a transmission module (502), configured to perform transmission of the N channels or N signals in accordance with the DCI;
wherein the N channels comprise N uplink channels or N downlink channels, the N signals comprise N uplink signals or N downlink signals, where N is an integer greater than 1;
wherein a bit length of at least one information field in the DCI corresponds to a configuration parameter;
wherein the at least one information field comprises a first information field;
wherein a bit length of the first information field is a maximum length of the first information field that corresponds to one or more sets of configuration parameters;
wherein the first information field comprises an information field for time-domain resource allocation, TDRA; the one or more sets of configuration parameters comprise one or more TDRA tables;
or,
wherein the first information field comprises an information field for frequency domain resource allocation, FDRA; the one or more sets of configuration parameters comprise one or more pieces of bandwidth part, BWP, information;
wherein the one or more TDRA tables are N TDRA tables, and different TDRA tables correspond to different respective channels or signals;
or,
wherein the one or more TDRA tables are a common TDRA table comprising TDRA information of the N channels or N signals, and a bit length of the information field for TDRA corresponds to a quantity of rows of the common TDRA table;
or,
wherein the one or more pieces of BWP information are N pieces of BWP information of N active BWPs;
or,
wherein the one or more pieces of BWP information comprise BWP information of an active BWP on a scheduling carrier, and BWP information of all configured BWPs on scheduled carriers.

11. The terminal (500) according to claim10, wherein the N channels are N channels on a same carrier, or, the N channels are channels on different carriers; or,
the N signals are N signals on a same carrier, or the N signals are signals on different carriers.

12. A network-side device (700), **characterized by** comprising:
a sending module (701), configured to send downlink control information, DCI, to a terminal, wherein the DCI is used for scheduling transmission of N channels or N signals of the terminal;
a transmission module (702), configured to perform transmission of the N channels or N signals in accordance with the DCI;
wherein the N channels comprise N uplink channels or N downlink channels, the N signals comprise N uplink signals or N downlink signals, where N is an integer greater than 1;
wherein a bit length of at least one information field in the DCI corresponds to a configuration parameter;
wherein the at least one information field comprises a first information field;
wherein a bit length of the first information field is a maximum length of the first information field that corresponds to one or more sets of configuration parameters;
wherein the first information field comprises an information field for time-domain resource allocation, TDRA; the one or more sets of configuration parameters comprise one or more TDRA tables;
or,
wherein the first information field comprises an information field for frequency domain resource allocation, FDRA; the one or more sets of configuration parameters comprise one or more pieces of bandwidth part, BWP, information;
wherein the one or more TDRA tables are N TDRA tables, and different TDRA tables correspond to different respective channels or signals;
or,
wherein the one or more TDRA tables are a common TDRA table comprising TDRA information of the N channels or N signals, and a bit length of the information field for TDRA corresponds to a quantity of rows of the common TDRA table;
or,
wherein the one or more pieces of BWP information are N pieces of BWP information of N active BWPs;
or,
wherein the one or more pieces of BWP information comprise BWP information of an active BWP on a scheduling carrier, and BWP information of all configured BWPs on scheduled carriers.

## Patentansprüche

1. Planungsverfahren, **dadurch gekennzeichnet, dass** es umfasst:
Empfangen (201) durch ein Endgerät von Downlink-Steuerinformationen (DCI), die von einer netzwerkseitigen Vorrichtung gesendet werden, wobei die DCI zur Planung der Übertragung von N Kanälen oder N Signalen des Endgeräts verwendet werden;
Durchführen der Übertragung der N Kanäle oder N Signale gemäß den DCI durch das Endgerät;
wobei die N Kanäle N Uplink-Kanäle oder N Downlink-Kanäle umfassen, die N Signale N Uplink-Signale oder N Downlink-Signale umfassen, wobei N eine ganze Zahl größer als 1 ist;
wobei eine Bitlänge von mindestens einem Informationsfeld in den DCI einem Konfigurationsparameter entspricht;
wobei das mindestens eine Informationsfeld ein erstes Informationsfeld umfasst;
wobei eine Bitlänge des ersten Informationsfelds eine maximale Länge des ersten Informationsfelds ist, die einem oder mehreren Sätzen von Konfigurationsparametern entspricht;
wobei das erste Informationsfeld ein Informationsfeld für Zeitbereichsressourcenzuweisung (TDRA) umfasst; und die einen oder mehreren Sätze von Konfigurationsparametern eine oder mehrere TDRA-Tabellen umfassen;
oder,
wobei das erste Informationsfeld ein Informationsfeld für Frequenzbereichsressourcenzuweisung (FDRA) umfasst; und die einen oder mehreren Sätze von Konfigurationsparametern ein oder mehrere Teile von Bandbreitenteil-Informationen (BWP-Informationen) umfassen;
wobei die einen oder mehreren TDRA-Tabellen N TDRA-Tabellen sind und unterschiedliche TDRA-Tabellen jeweils unterschiedlichen Kanälen oder Signalen entsprechen;
oder,
wobei die einen oder mehreren TDRA-Tabellen eine gemeinsame TDRA-Tabelle sind, die TDRA-Informationen der N Kanäle oder N Signale umfasst, und eine Bitlänge des Informationsfelds für TDRA einer Anzahl von Zeilen der gemeinsamen TDRA-Tabelle entspricht;
oder,
wobei die einen oder mehreren Teile von BWP-Informationen N Teile von BWP-Informationen von N aktiven BWPs sind;
oder,
wobei die einen oder mehreren Teile von BWP-Informationen BWP-Informationen eines aktiven BWP auf einem Planungsträger sowie BWP-Informationen aller konfigurierten BWPs auf geplanten Trägern umfassen.

2. Planungsverfahren nach Anspruch 1, wobei die N Kanäle Kanäle auf demselben Träger sind, oder die N Kanäle Kanäle auf unterschiedlichen Trägern sind; oder,
die N Signale Signale auf demselben Träger sind, oder die N Signale Signale auf unterschiedlichen Trägern sind.

3. Planungsverfahren nach Anspruch 1, wobei für den Fall, dass die einen oder mehreren TDRA-Tabellen N TDRA-Tabellen sind und unterschiedliche TDRA-Tabellen jeweils unterschiedlichen Kanälen oder Signalen entsprechen,
die N TDRA-Tabellen die gleiche Anzahl von Zeilen aufweisen und eine Bitlänge des Informationsfelds für TDRA der Anzahl von Zeilen der N TDRA-Tabellen entspricht; oder,
die N TDRA-Tabellen unterschiedliche Anzahlen von Zeilen aufweisen und die Bitlänge des Informationsfelds für TDRA einer maximalen Anzahl von Zeilen aus den N TDRA-Tabellen entspricht; oder,
die Bitlänge des Informationsfelds für TDRA einer Gesamtanzahl von Zeilen der N TDRA-Tabellen entspricht;
oder,
wobei für den Fall, dass die einen oder mehreren Teile von BWP-Informationen N Teile von BWP-Informationen von N aktiven BWPs sind, die Bitlänge des Informationsfelds für FDRA dem BWP mit der größten Bandbreite aus den N aktiven BWPs entspricht, oder die Bitlänge des Informationsfelds für FDRA der Gesamtbandbreite der N aktiven BWPs entspricht; oder,
wobei für den Fall, dass die einen oder mehreren Teile von BWP-Informationen BWP-Informationen eines aktiven BWP auf einem Planungsträger und BWP-Informationen aller konfigurierten BWPs auf geplanten Trägern umfassen, die Bitlänge des Informationsfelds für FDRA dem BWP mit der größten Bandbreite aus dem aktiven BWP auf dem Planungsträger und allen konfigurierten BWPs auf den geplanten Trägern entspricht, wobei der Planungsträger ein Träger ist, auf dem die DCI gesendet wird, und die geplanten Träger Träger sind, auf denen sich die durch die DCI geplanten Kanäle oder Signale befinden.

4. Planungsverfahren nach Anspruch 3, wobei für den Fall, dass die Bitlänge des Informationsfelds für TDRA der maximalen Anzahl von Zeilen aus den N TDRA-Tabellen entspricht, alle Bits des Informationsfelds für TDRA dazu verwendet werden, einen Eintragsindex in einer ersten TDRA-Tabelle anzugeben, und M1 niedrigstwertige Bits (LSBs) des Informationsfelds für TDRA dazu verwendet werden, einen Eintragsindex in einer zweiten TDRA-Tabelle anzugeben, wobei die erste TDRA-Tabelle eine Tabelle mit der maximalen Anzahl von Zeilen aus den N TDRA-Tabellen ist, die zweite TDRA-Tabelle eine Tabelle mit einer von der ersten TDRA-Tabelle unterschiedlichen Anzahl von Zeilen aus den N TDRA-Tabellen ist, wobei M1 eine ganze Zahl größer oder gleich 1 ist; oder,
wobei für den Fall, dass die Bitlänge des Informationsfelds für TDRA der Gesamtanzahl von Zeilen der N TDRA-Tabellen entspricht, das Informationsfeld für TDRA N Bitteile umfasst, die jeweils zur Angabe von Eintragsindizes in den N TDRA-Tabellen verwendet werden;
oder,
wobei für den Fall, dass die Bitlänge des Informationsfelds für FDRA dem BWP mit der größten Bandbreite aus den N aktiven BWPs entspricht, alle Bits des Informationsfelds für FDRA dazu verwendet werden, FDRA eines ersten aktiven BWP anzugeben, und M2 LSBs des Informationsfelds für FDRA dazu verwendet werden, FDRA eines zweiten aktiven BWP anzugeben, wobei der erste aktive BWP ein BWP mit der größten Bandbreite aus den N aktiven BWPs ist, der zweite aktive BWP ein BWP mit einer von der Bandbreite des ersten aktiven BWP unterschiedlichen Bandbreite aus den N aktiven BWPs ist, wobei M2 eine ganze Zahl größer oder gleich 1 ist; oder,
wobei für den Fall, dass die Bitlänge des Informationsfelds für FDRA der Gesamtbandbreite der N aktiven BWPs entspricht, die FDRA, die durch das Informationsfeld für FDRA angegeben ist, gleichzeitig FDRAs der N aktiven BWPs umfasst.

5. Planungsverfahren nach Anspruch 1, wobei für den Fall, dass die Übertragungsstartpositionen der N Kanäle oder der N Signale vor einem Empfangszeitpunkt der DCI liegen, das Endgerät keine Übertragung der N Kanäle oder der N Signale durchführt.

6. Planungsverfahren, **dadurch gekennzeichnet, dass** es umfasst:
Senden (401) durch eine netzwerkseitige Vorrichtung von Downlink-Steuerinformationen (DCI) an ein Endgerät, wobei die DCI zur Planung der Übertragung von N Kanälen oder N Signalen des Endgeräts verwendet werden;
Durchführen der Übertragung der N Kanäle oder N Signale gemäß den DCI durch die netzwerkseitige Vorrichtung;
wobei die N Kanäle N Uplink-Kanäle oder N Downlink-Kanäle umfassen, die N Signale N Uplink-Signale oder N Downlink-Signale umfassen, wobei N eine ganze Zahl größer als 1 ist;
wobei eine Bitlänge von mindestens einem Informationsfeld in den DCI einem Konfigurationsparameter entspricht;
wobei das mindestens eine Informationsfeld ein erstes Informationsfeld umfasst;
wobei eine Bitlänge des ersten Informationsfelds eine maximale Länge des ersten Informationsfelds ist, die einem oder mehreren Sätzen von Konfigurationsparametern entspricht;
wobei das erste Informationsfeld ein Informationsfeld für Zeitbereichsressourcenzuweisung (TDRA) umfasst; und die einen oder mehreren Sätze von Konfigurationsparametern eine oder mehrere TDRA-Tabellen umfassen;
oder,
wobei das erste Informationsfeld ein Informationsfeld für Frequenzbereichsressourcenzuweisung (FDRA) umfasst; und die einen oder mehreren Sätze von Konfigurationsparametern ein oder mehrere Teile von Bandbreitenteil-Informationen (BWP-Informationen) umfassen;
wobei die einen oder mehreren TDRA-Tabellen N TDRA-Tabellen sind und unterschiedliche TDRA-Tabellen jeweils unterschiedlichen Kanälen oder Signalen entsprechen;
oder,
wobei die einen oder mehreren TDRA-Tabellen eine gemeinsame TDRA-Tabelle sind, die TDRA-Informationen der N Kanäle oder N Signale umfasst, und eine Bitlänge des Informationsfelds für TDRA einer Anzahl von Zeilen der gemeinsamen TDRA-Tabelle entspricht;
oder,
wobei die einen oder mehreren Teile von BWP-Informationen N Teile von BWP-Informationen von N aktiven BWPs sind;
oder,
wobei die einen oder mehreren Teile von BWP-Informationen BWP-Informationen eines aktiven BWP auf einem Planungsträger sowie BWP-Informationen aller konfigurierten BWPs auf geplanten Trägern umfassen.

7. Planungsverfahren nach Anspruch 6, wobei die N Kanäle Kanäle auf demselben Träger sind, oder die N Kanäle Kanäle auf unterschiedlichen Trägern sind; oder,
die N Signale Signale auf demselben Träger sind, oder die N Signale Signale auf unterschiedlichen Trägern sind.

8. Planungsverfahren nach Anspruch 6, wobei für den Fall, dass die einen oder mehreren TDRA-Tabellen N TDRA-Tabellen sind und unterschiedliche TDRA-Tabellen jeweils unterschiedlichen Kanälen oder Signalen entsprechen,
die N TDRA-Tabellen die gleiche Anzahl von Zeilen aufweisen und eine Bitlänge des Informationsfelds für TDRA der Anzahl von Zeilen der N TDRA-Tabellen entspricht; oder,
die N TDRA-Tabellen unterschiedliche Anzahlen von Zeilen aufweisen und die Bitlänge des Informationsfelds für TDRA einer maximalen Anzahl von Zeilen aus den N TDRA-Tabellen entspricht; oder,
die Bitlänge des Informationsfelds für TDRA einer Gesamtanzahl von Zeilen der N TDRA-Tabellen entspricht;
oder,
wobei für den Fall, dass die einen oder mehreren Teile von BWP-Informationen N Teile von BWP-Informationen von N aktiven BWPs sind, die Bitlänge des Informationsfelds für FDRA dem BWP mit der größten Bandbreite aus den N aktiven BWPs entspricht, oder die Bitlänge des Informationsfelds für FDRA der Gesamtbandbreite der N aktiven BWPs entspricht; oder,
wobei für den Fall, dass die einen oder mehreren Teile von BWP-Informationen BWP-Informationen eines aktiven BWP auf einem Planungsträger und BWP-Informationen aller konfigurierten BWPs auf geplanten Trägern umfassen, die Bitlänge des Informationsfelds für FDRA dem BWP mit der größten Bandbreite aus dem aktiven BWP auf dem Planungsträger und allen konfigurierten BWPs auf den geplanten Trägern entspricht, wobei der Planungsträger ein Träger ist, auf dem die DCI gesendet wird, und die geplanten Träger Träger sind, auf denen sich die durch die DCI geplanten Kanäle oder Signale befinden.

9. Planungsverfahren nach Anspruch 8, wobei für den Fall, dass die Bitlänge des Informationsfelds für TDRA der maximalen Anzahl von Zeilen aus den N TDRA-Tabellen entspricht, alle Bits des Informationsfelds für TDRA dazu verwendet werden, einen Eintragsindex in einer ersten TDRA-Tabelle anzugeben, und M1 niedrigstwertige Bits (LSBs) des Informationsfelds für TDRA dazu verwendet werden, einen Eintragsindex in einer zweiten TDRA-Tabelle anzugeben, wobei die erste TDRA-Tabelle eine Tabelle mit der maximalen Anzahl von Zeilen aus den N TDRA-Tabellen ist, die zweite TDRA-Tabelle eine Tabelle mit einer von der ersten TDRA-Tabelle unterschiedlichen Anzahl von Zeilen aus den N TDRA-Tabellen ist, wobei M1 eine ganze Zahl größer oder gleich 1 ist; oder,
wobei für den Fall, dass die Bitlänge des Informationsfelds für TDRA der Gesamtanzahl von Zeilen der N TDRA-Tabellen entspricht, das Informationsfeld für TDRA N Bitteile umfasst, die jeweils zur Angabe von Eintragsindizes in den N TDRA-Tabellen verwendet werden;
oder,
wobei für den Fall, dass die Bitlänge des Informationsfelds für FDRA dem BWP mit der größten Bandbreite aus den N aktiven BWPs entspricht, alle Bits des Informationsfelds für FDRA dazu verwendet werden, FDRA eines ersten aktiven BWP anzugeben, und M2 LSBs des Informationsfelds für FDRA dazu verwendet werden, FDRA eines zweiten aktiven BWP anzugeben, wobei der erste aktive BWP ein BWP mit der größten Bandbreite aus den N aktiven BWPs ist, der zweite aktive BWP ein BWP mit einer von der Bandbreite des ersten aktiven BWP unterschiedlichen Bandbreite aus den N aktiven BWPs ist, wobei M2 eine ganze Zahl größer oder gleich 1 ist; oder,
wobei für den Fall, dass die Bitlänge des Informationsfelds für FDRA der Gesamtbandbreite der N aktiven BWPs entspricht, die FDRA, die durch das Informationsfeld für FDRA angegeben ist, gleichzeitig FDRAs der N aktiven BWPs umfasst.

10. Endgerät (500), **dadurch gekennzeichnet, dass** es umfasst:
ein Empfangsmodul (501), das dazu konfiguriert ist, Downlink-Steuerinformationen (DCI) zu empfangen, die von einer netzwerkseitigen Vorrichtung gesendet werden, wobei die DCI zur Planung der Übertragung von N Kanälen oder N Signalen des Endgeräts verwendet werden;
ein Übertragungsmodul (502), das dazu konfiguriert ist, die Übertragung der N Kanäle oder N Signale gemäß den DCI durchzuführen;
wobei die N Kanäle N Uplink-Kanäle oder N Downlink-Kanäle umfassen, die N Signale N Uplink-Signale oder N Downlink-Signale umfassen, wobei N eine ganze Zahl größer als 1 ist;
wobei eine Bitlänge von mindestens einem Informationsfeld in den DCI einem Konfigurationsparameter entspricht;
wobei das mindestens eine Informationsfeld ein erstes Informationsfeld umfasst;
wobei eine Bitlänge des ersten Informationsfelds eine maximale Länge des ersten Informationsfelds ist, die einem oder mehreren Sätzen von Konfigurationsparametern entspricht;
wobei das erste Informationsfeld ein Informationsfeld für Zeitbereichsressourcenzuweisung (TDRA) umfasst; und die einen oder mehreren Sätze von Konfigurationsparametern eine oder mehrere TDRA-Tabellen umfassen;
oder,
wobei das erste Informationsfeld ein Informationsfeld für Frequenzbereichsressourcenzuweisung (FDRA) umfasst; und die einen oder mehreren Sätze von Konfigurationsparametern ein oder mehrere Teile von Bandbreitenteil-Informationen (BWP-Informationen) umfassen;
wobei die einen oder mehreren TDRA-Tabellen N TDRA-Tabellen sind und unterschiedliche TDRA-Tabellen jeweils unterschiedlichen Kanälen oder Signalen entsprechen;
oder,
wobei die einen oder mehreren TDRA-Tabellen eine gemeinsame TDRA-Tabelle sind, die TDRA-Informationen der N Kanäle oder N Signale umfasst, und eine Bitlänge des Informationsfelds für TDRA einer Anzahl von Zeilen der gemeinsamen TDRA-Tabelle entspricht;
oder,
wobei die einen oder mehreren Teile von BWP-Informationen N Teile von BWP-Informationen von N aktiven BWPs sind;
oder,
wobei die einen oder mehreren Teile von BWP-Informationen BWP-Informationen eines aktiven BWP auf einem Planungsträger sowie BWP-Informationen aller konfigurierten BWPs auf geplanten Trägern umfassen.

11. Endgerät (500) nach Anspruch 10, wobei die N Kanäle N Kanäle auf demselben Träger sind, oder die N Kanäle Kanäle auf unterschiedlichen Trägern sind; oder,
die N Signale N Signale auf demselben Träger sind, oder die N Signale Signale auf unterschiedlichen Trägern sind.

12. Netzwerkseitige Vorrichtung (700), **dadurch gekennzeichnet, dass** sie umfasst:
ein Sendemodul (701), das dazu konfiguriert ist, Downlink-Steuerinformationen (DCI) an ein Endgerät zu senden, wobei die DCI zur Planung der Übertragung von N Kanälen oder N Signalen des Endgeräts verwendet werden;
ein Übertragungsmodul (702), das dazu konfiguriert ist, die Übertragung der N Kanäle oder N Signale gemäß den DCI durchzuführen;
wobei die N Kanäle N Uplink-Kanäle oder N Downlink-Kanäle umfassen, die N Signale N Uplink-Signale oder N Downlink-Signale umfassen, wobei N eine ganze Zahl größer als 1 ist;
wobei eine Bitlänge von mindestens einem Informationsfeld in den DCI einem Konfigurationsparameter entspricht;
wobei das mindestens eine Informationsfeld ein erstes Informationsfeld umfasst;
wobei eine Bitlänge des ersten Informationsfelds eine maximale Länge des ersten Informationsfelds ist, die einem oder mehreren Sätzen von Konfigurationsparametern entspricht;
wobei das erste Informationsfeld ein Informationsfeld für Zeitbereichsressourcenzuweisung (TDRA) umfasst; und die einen oder mehreren Sätze von Konfigurationsparametern eine oder mehrere TDRA-Tabellen umfassen;
oder,
wobei das erste Informationsfeld ein Informationsfeld für Frequenzbereichsressourcenzuweisung (FDRA) umfasst; und die einen oder mehreren Sätze von Konfigurationsparametern ein oder mehrere Teile von Bandbreitenteil-Informationen (BWP-Informationen) umfassen;
wobei die einen oder mehreren TDRA-Tabellen N TDRA-Tabellen sind und unterschiedliche TDRA-Tabellen jeweils unterschiedlichen Kanälen oder Signalen entsprechen;
oder,
wobei die einen oder mehreren TDRA-Tabellen eine gemeinsame TDRA-Tabelle sind, die TDRA-Informationen der N Kanäle oder N Signale umfasst, und eine Bitlänge des Informationsfelds für TDRA einer Anzahl von Zeilen der gemeinsamen TDRA-Tabelle entspricht;
oder,
wobei die einen oder mehreren Teile von BWP-Informationen N Teile von BWP-Informationen von N aktiven BWPs sind;
oder,
wobei die einen oder mehreren Teile von BWP-Informationen BWP-Informationen eines aktiven BWP auf einem Planungsträger sowie BWP-Informationen aller konfigurierten BWPs auf geplanten Trägern umfassen.

## Revendications

1. Procédé de planification, **caractérisé en ce qu'**il comprend les étapes consistant à :
recevoir (201), par un terminal, des informations de commande de liaison descendante, dites DCI, envoyées par un dispositif côté réseau, dans lequel les DCI sont utilisées pour planifier une transmission de N canaux ou de N signaux du terminal ;
effectuer, par le terminal, une transmission des N canaux ou des N signaux conformément aux DCI ;
dans lequel les N canaux comprennent N canaux de liaison montante ou N canaux de liaison descendante, les N signaux comprennent N signaux de liaison montante ou N signaux de liaison descendante, où N est un nombre entier supérieur à 1 ;
dans lequel une longueur de bits d'au moins un champ d'informations des DCI correspond à un paramètre de configuration ;
dans lequel l'au moins un champ d'informations comprend un premier champ d'informations ;
dans lequel une longueur de bits du premier champ d'informations est une longueur maximale du premier champ d'informations qui correspond à un ou à plusieurs ensembles de paramètres de configuration ;
dans lequel le premier champ d'informations comprend un champ d'informations d'attribution de ressources de domaine temporel, dite TDRA ; le ou les ensembles de paramètres de configuration comprennent une ou plusieurs tables de TDRA ;
ou,
dans lequel le premier champ d'informations comprend un champ d'informations d'attribution de ressources de domaine fréquentiel, dite FDRA ; le ou les ensembles de paramètres de configuration comprennent un ou plusieurs éléments d'informations de partie de largeur de bande, dite BWP ;
dans lequel la ou les tables de TDRA sont N tables de TDRA, et différentes tables de TDRA correspondent à différents canaux ou signaux respectifs ;
ou,
dans lequel la ou les tables de TDRA sont une table de TDRA commune comprenant des informations de TDRA des N canaux ou N signaux, et une longueur de bits du champ d'informations de TDRA correspond à une quantité de rangées de la table de TDRA commune ;
ou,
dans lequel le ou les éléments d'informations de BWP sont N éléments d'informations de BWP de N BWP actives ;
ou,
dans lequel le ou les éléments d'informations de BWP comprennent des informations de BWP d'une BWP active sur une porteuse de planification, et des informations de BWP de toutes les BWP configurées sur des porteuses planifiées.

2. Procédé de planification selon la revendication 1, dans lequel les N canaux sont des canaux sur une même porteuse, ou les N canaux sont des canaux sur des porteuses différentes ; ou
les N signaux sont des signaux sur une même porteuse, ou les N signaux sont des signaux sur des porteuses différentes ;

3. Procédé de planification selon la revendication 1, dans lequel, dans un cas dans lequel la ou les tables de TDRA sont N tables de TDRA, et différentes tables de TDRA correspondent à différents canaux ou signaux respectifs,
les N tables de TDRA comportent une même quantité de rangées, et une longueur de bits du champ d'informations de TDRA correspond à la quantité de rangées des N tables de TDRA ; ou,
les N tables de TDRA comportent des quantités différentes de rangées, et la longueur de bits du champ d'informations de TDRA correspond à une quantité maximale de rangées parmi les N tables de TDRA ; ou,
la longueur de bits du champ d'informations de TDRA correspond à une quantité totale de rangées des N tables de TDRA ;
ou,
dans lequel, dans un cas dans lequel le ou les éléments d'informations de BWP sont N éléments d'informations de BWP de N BWP actives, une longueur de bits du champ d'informations de FDRA correspond à une BWP ayant une largeur de bande la plus grande parmi les N BWP actives, ou, la longueur de bits du champ d'informations de FDRA correspond à une largeur de bande totale des N BWP actives ; ou,
dans lequel, dans un cas dans lequel le ou les éléments d'informations de BWP comprennent des informations de BWP d'une BWP active sur une porteuse de planification, et des informations de BWP de toutes les BWP configurées sur des porteuses planifiées, la longueur de bits du champ d'informations de FDRA correspond à une BWP ayant une largeur de bande la plus grande parmi la BWP active sur la porteuse de planification et toutes les BWP configurées sur les porteuses planifiées, la porteuse de planification étant une porteuse sur laquelle sont envoyées les DCI, et les porteuses planifiées étant des porteuses sur lesquelles sont situés les canaux ou les signaux planifiés par les DCI.

4. Procédé de planification selon la revendication 3, dans lequel, dans un cas dans lequel la longueur de bits du champ d'informations de TDRA correspond à la quantité maximale de rangées parmi les N tables de TDRA, tous les bits du champ d'informations de TDRA sont utilisés pour indiquer un index d'entrée dans une première table de TDRA, et M1 bits de poids faible, dits LSB, du champ d'informations de TDRA sont utilisés pour indiquer un index d'entrée dans une seconde table de TDRA, dans lequel la première table de TDRA est une table comportant une quantité maximale de rangées parmi les N tables de TDRA, la seconde table de TDRA est une table comportant une quantité de rangées différente de la première table de TDRA parmi les N tables de TDRA, où M1 est un nombre entier supérieur ou égal à 1 ; ou,
dans lequel, dans un cas dans lequel la longueur de bits du champ d'informations de TDRA correspond à la quantité totale de rangées des N tables de TDRA, le champ d'informations de TDRA comprend N parties de bit utilisées respectivement pour indiquer des index d'entrée dans les N tables de TDRA ;
ou,
dans lequel, dans un cas dans lequel la longueur de bits du champ d'informations de FDRA correspond à la BWP ayant la largeur de bande la plus grande parmi les N BWP actives, tous les bits du champ d'informations de FDRA sont utilisés pour indiquer une FDRA d'une première BWP active, et M2 LSB du champ d'informations de FDRA sont utilisés pour indiquer une FDRA d'une seconde BWP active, dans lequel la première BWP active est une BWP ayant la largeur de bande la plus grande parmi les N BWP actives, la seconde BWP active est une BWP ayant une largeur de bande différente de la première BWP active parmi les N BWP actives, où M2 est un nombre entier supérieur ou égal à 1 ; ou,
dans lequel, dans un cas dans lequel la longueur de bits du champ d'informations de FDRA correspond à la largeur de bande totale des N BWP actives, la FDRA indiquée par le champ d'informations de FDRA comprend simultanément les FDRA des N BWP actives.

5. Procédé de planification selon la revendication 1, dans lequel, dans un cas dans lequel des positions de début de transmission des N canaux ou des N signaux précèdent un instant de réception de l'instant de réception de DCI, le terminal n'effectue pas de transmission des N canaux ou des N signaux.

6. Procédé de planification, **caractérisé en ce qu'**il comprend les étapes consistant à :
envoyer (401), par un dispositif côté réseau, des informations de commande de liaison descendante, dites DCI, à un terminal, dans lequel les DCI sont utilisées pour planifier une transmission de N canaux ou de N signaux du terminal ;
effectuer, par le dispositif côté réseau, une transmission des N canaux ou des N signaux conformément aux DCI ;
dans lequel les N canaux comprennent N canaux de liaison montante ou N canaux de liaison descendante, les N signaux comprennent N signaux de liaison montante ou N signaux de liaison descendante, où N est un nombre entier supérieur à 1 ;
dans lequel une longueur de bits d'au moins un champ d'informations des DCI correspond à un paramètre de configuration ;
dans lequel l'au moins un champ d'informations comprend un premier champ d'informations ;
dans lequel une longueur de bits du premier champ d'informations est une longueur maximale du premier champ d'informations qui correspond à un ou à plusieurs ensembles de paramètres de configuration ;
dans lequel le premier champ d'informations comprend un champ d'informations d'attribution de ressources de domaine temporel, dite TDRA ; le ou les ensembles de paramètres de configuration comprennent une ou plusieurs tables de TDRA ;
ou,
dans lequel le premier champ d'informations comprend un champ d'informations d'attribution de ressources de domaine fréquentiel, dite FDRA ; le ou les ensembles de paramètres de configuration comprennent un ou plusieurs éléments d'informations de partie de largeur de bande, dite BWP ;
dans lequel la ou les tables de TDRA sont N tables de TDRA, et différentes tables de TDRA correspondent à différents canaux ou signaux respectifs ;
ou,
dans lequel la ou les tables de TDRA sont une table de TDRA commune comprenant des informations de TDRA des N canaux ou des N signaux, et une longueur de bits du champ d'informations de TDRA correspond à une quantité de rangées de la table de TDRA commune ;
ou,
dans lequel le ou les éléments d'informations de BWP sont N éléments d'informations de BWP de N BWP actives ;
ou,
dans lequel le ou les éléments d'informations de BWP comprennent des informations de BWP d'une BWP active sur une porteuse de planification, et des informations de BWP de toutes les BWP configurées sur des porteuses planifiées.

7. Procédé de planification selon la revendication 6, dans lequel les N canaux sont des canaux sur une même porteuse, ou, les N canaux sont des canaux sur des porteuses différentes ; ou,
les N signaux sont des signaux sur une même porteuse, ou les N signaux sont des signaux sur des porteuses différentes.

8. Procédé de planification selon la revendication 6, dans lequel, dans un cas dans lequel la ou les tables de TDRA sont N tables de TDRA, et différentes tables de TDRA correspondent à différents canaux ou signaux respectifs,
les N tables de TDRA comportent une même quantité de rangées, et une longueur de bits du champ d'informations de TDRA correspond à la quantité de rangées des N tables de TDRA ; ou,
les N tables de TDRA comportent différentes quantités de rangées, et la longueur de bits du champ d'informations de TDRA correspond à une quantité maximale de rangées parmi les N tables de TDRA ; ou,
la longueur de bits du champ d'informations de TDRA correspond à une quantité totale de rangées des N tables de TDRA ;
ou,
dans lequel, dans un cas dans lequel le ou les éléments d'informations de BWP sont N éléments d'informations de BWP de N BWP actives, une longueur de bits du champ d'informations de FDRA correspond à une BWP ayant une largeur de bande la plus grande parmi les N BWP actives, ou, la longueur de bits du champ d'informations de FDRA correspond à une largeur de bande totale des N BWP actives ; ou,
dans lequel, dans un cas dans lequel le ou les éléments d'informations de BWP comprennent des informations de BWP d'une BWP active sur une porteuse de planification, et des informations de BWP de toutes les BWP configurées sur des porteuses planifiées, la longueur de bits du champ d'informations de FDRA correspond à une BWP ayant une largeur de bande la plus grande parmi la BWP active sur la porteuse de planification et toutes les BWP configurées sur les porteuses planifiées, la porteuse de planification étant une porteuse sur laquelle sont envoyées les DCI, et les porteuses planifiées étant des porteuses sur lesquelles sont situés les canaux ou les signaux planifiés par les DCI.

9. Procédé de planification selon la revendication 8, dans lequel, dans un cas dans lequel la longueur de bits du champ d'informations de TDRA correspond à la quantité maximale de rangées parmi les N tables de TDRA, tous les bits du champ d'informations de TDRA sont utilisés pour indiquer un index d'entrée dans une première table de TDRA, M1 bits de poids faible, dits LSB, du champ d'informations de TDRA sont utilisés pour indiquer un index d'entrée dans une seconde table de TDRA, dans lequel la première table de TDRA est une table comportant la quantité maximale de rangées parmi les N tables de TDRA, et la seconde table de TDRA est une table comportant une quantité de rangées différente de la première table de TDRA parmi les N tables de TDRA, où M1 est un nombre entier supérieur ou égal à 1 ; ou,
dans un cas dans lequel la longueur de bits du champ d'informations de TDRA correspond à la quantité totale de rangées des N tables de TDRA, le champ d'informations de TDRA comprend N parties de bit utilisées respectivement pour indiquer des index d'entrée dans les N tables de TDRA ;
ou,
dans lequel, dans un cas dans lequel la longueur de bits du champ d'informations de FDRA correspond à la BWP ayant la largeur de bande la plus grande parmi les N BWP actives, tous les bits du champ d'informations de FDRA sont utilisés pour indiquer une FDRA d'une première BWP active, et M2 LSB du champ d'informations de FDRA sont utilisés pour indiquer une FDRA d'une seconde BWP active, dans lequel la première BWP active est une BWP ayant la largeur de bande la plus grande parmi les N BWP actives, la seconde BWP active est une BWP ayant une largeur de bande différente de la première BWP active parmi les N BWP actives, où M2 est un nombre entier supérieur ou égal à 1 ; ou,
dans lequel, dans un cas dans lequel la longueur de bits du champ d'informations de FDRA correspond à la largeur de bande totale des N BWP actives, la FDRA indiquée par le champ d'informations de FDRA comprend simultanément les FDRA des N BWP actives.

10. Terminal (500), **caractérisé en ce qu'**il comprend :
un module de réception (501), configuré pour recevoir des informations de commande de liaison descendante, dites DCI, envoyées par un dispositif côté réseau, dans lequel les DCI sont utilisées pour planifier une transmission de N canaux ou de N signaux du terminal ;
un module de transmission (502), configuré pour effectuer une transmission des N canaux ou des N signaux conformément aux DCI ;
dans lequel les N canaux comprennent N canaux de liaison montante ou N canaux de liaison descendante, les N signaux comprennent N signaux de liaison montante ou N signaux de liaison descendante, où N est un nombre entier supérieur à 1 ;
dans lequel une longueur de bits d'au moins un champ d'informations des DCI correspond à un paramètre de configuration ;
dans lequel l'au moins un champ d'informations comprend un premier champ d'informations ;
dans lequel une longueur de bits du premier champ d'informations est une longueur maximale du premier champ d'informations qui correspond à un ou plusieurs ensembles de paramètres de configuration ;
dans lequel le premier champ d'informations comprend un champ d'informations d'attribution de ressources de domaine temporel, dite TDRA ; le ou les ensembles de paramètres de configuration comprennent une ou plusieurs tables de TDRA ;
ou,
dans lequel le premier champ d'informations comprend un champ d'informations d'attribution de ressources de domaine fréquentiel, dite FDRA ; le ou les ensembles de paramètres de configuration comprennent un ou plusieurs éléments d'informations de partie de largeur de bande, dite BWP ;
dans lequel la ou les tables de TDRA sont N tables de TDRA, et différentes tables de TDRA correspondent à différents canaux ou signaux respectifs ;
ou,
dans lequel la ou les tables de TDRA sont une table de TDRA commune comprenant des informations de TDRA des N canaux ou des N signaux, et une longueur de bits du champ d'informations de TDRA correspond à une quantité de rangées de la table de TDRA commune ;
ou,
dans lequel le ou les éléments d'informations de BWP sont N éléments d'informations de BWP de N BWP actives ;
ou,
dans lequel le ou les éléments de BWP comprennent des informations de BWP d'une BWP active sur une porteuse de planification, et des informations de BWP de toutes les BWP configurées sur des porteuses planifiées.

11. Terminal (500) selon la revendication 10, dans lequel les N canaux sont N canaux sur une même porteuse, ou, les N canaux sont des canaux sur des porteuses différentes ; ou,
les N signaux sont N signaux sur une même porteuse, ou les N signaux sont des signaux sur des porteuses différentes.

12. Dispositif côté réseau (700), **caractérisé en ce qu'**il comprend :
un module d'envoi (701), configuré pour envoyer des informations de commande de liaison descendante, dites DCI, à un terminal, dans lequel les DCI sont utilisées pour planifier une transmission de N canaux ou de N signaux du terminal ;
un module de transmission (702), configuré pour effectuer une transmission des N canaux ou des N signaux conformément aux DCI ;
dans lequel les N canaux comprennent N canaux de liaison montante ou N canaux de liaison descendante, les N signaux comprennent N signaux de liaison montante ou N signaux de liaison descendante, où N est un nombre entier supérieur à 1 ;
dans lequel une longueur de bits d'au moins un champ d'informations correspond à un paramètre de configuration ;
dans lequel l'au moins un champ d'informations comprend un premier champ d'informations ;
dans lequel une longueur de bits du premier champ d'informations est une longueur maximale du premier champ d'informations qui correspond à un ou à plusieurs ensembles de paramètres de configuration ;
dans lequel le premier champ d'informations comprend un champ d'informations d'attribution de ressources de domaine temporel, dite TDRA ; le ou les ensembles de paramètres de configuration comprennent une ou plusieurs tables de TDRA ;
ou,
dans lequel le premier champ d'informations comprend un champ d'informations d'attribution de ressources de domaine fréquentiel, dite FDRA ; le ou les ensembles de paramètres de configuration comprennent un ou plusieurs éléments d'informations de partie de largeur de bande, dite BWP ;
dans lequel la ou les tables de TDRA sont N tables de TDRA, et différentes tables de TDRA correspondent à différents canaux ou signaux respectifs ;
ou,
dans lequel la ou les tables de TDRA sont une table de TDRA commune comprenant des informations de TDRA des N canaux ou des N signaux, et une longueur de bits du champ d'informations de TDRA correspond à une quantité de rangées de la table de TDRA commune ;
ou,
dans lequel le ou les éléments d'informations de BWP sont N éléments d'informations de BWP des N BWP actives ;
ou,
dans lequel le ou les éléments d'informations de BWP comprennent des informations de BWP d'une BWP active sur une porteuse de planification, et des informations de BWP de toutes les BWP configurées sur des porteuses planifiées.
